# EUROPÄISCHE PATENTANMELDUNG

(11) **EP 4 191 036 A1**
(43) Veröffentlichungstag der Anmeldung: **07.06.2023**
(21) Anmeldenummer: 22205749.9
(22) Anmeldetag: 07.11.2022
(51) Int. Cl.: F02B 21/00, F02B 33/44, F02D 41/00, F02M 35/10, F02M 35/108, F02D 17/02

(54) **VERFAHREN ZUM BETRIEB EINER AUFGELADENEN VERBRENNUNGSKRAFTMASCHINE SOWIE VORRICHTUNG ZUR BEREITSTELLUNG VON VERBRENNUNGSLUFT FÜR EINE AUFGELADENE VERBRENNUNGSKRAFTMASCHINE**

(30) Priorität: 01.12.2021 CH 0706292021
(71) Anmelder: Liebherr Machines Bulle SA, 1630 Bulle (CH)
(72) Erfinder: SEBA, Dr. Bouzid, 1632 Broc (CH); BAERT, Michael-Alexandre, 3280 Murten (CH); SILVESTRINI, Sandro, 6952 Canobbio Ticino (CH); NOCA, Alix, 1700 Fribourg (CH)
(74) Vertreter: von Tietzen und Hennig, Nikolaus

(57) **Zusammenfassung**

Die Erfindung betrifft ein Verfahren zum Betrieb einer aufgeladenen Verbrennungskraftmaschine mit wenigstens einer Zylindergruppe mit einer Anzahl n von Brennräumen, wobei während eines ersten Betriebszustandes alle n Brennräume mit Verbrennungsluft über einen primären Ladeluftpfad versorgt werden und während eines zweiten Betriebszustandes nur ein Teil der n Brennräume aus dem primären Ladeluftpfad und ein anderer Teil der n Brennräume aus einem gesonderten Druckluftspeicher mit Verbrennungsluft versorgt werden.

## Beschreibung

Die Erfindung betrifft ein Verfahren zum Betrieb einer aufgeladenen Verbrennungskraftmaschine mit wenigstens einer Zylindergruppe mit einer Anzahl n von Brennräumen sowie eine Vorrichtung zur Bereitstellung von Verbrennungsluft für eine aufgeladene Verbrennungskraftmaschine.

Das Anstreben höherer Wirkungsgrade und höherer Leistungsdichten für Verbrennungskraftmaschinen hat dazu geführt, dass seit langem nahezu alle kommerziell eingesetzten Verbrennungskraftmaschinen aufgeladen werden. Am häufigsten werden hierfür Abgasturbolader eingesetzt. Bei einer mittels Abgasturbolader aufgeladenen Verbrennungskraftmaschine tritt in einer Betriebssituation mit vergleichsweise niedriger Kurbelwellendrehzahl und starkem Anstieg der Abgabeleistungsanforderung das allgemeinhin bekannte Phänomen des sogenannten Turbolochs in einer besonders deutlichen Ausprägung auf. Einer entsprechend schnellen Steigerung der Leistungsabgabe einer Verbrennungskraftmaschine sind dadurch Grenzen gesetzt, weil die Erhöhung einer Energieumsetzung von einem Verbrennungsvorgang zum nachfolgenden Verbrennungsvorgang nur um ein bestimmtes Quantum gesteigert werden kann. In aller Regel wird den heutigen Verbrennungskraftmaschinen der Kraftstoff unter einem stark bis hin zu einem extrem stark erhöhten Druck zur Verfügung gestellt.

Beim Einsatz von Flüssigkraftstoffen kann aus einer technischen, sich allein auf die Kraftstoffförderung beschränkenden Sicht die dem Brennraum zugeführte Kraftstoffmenge extrem schnell gesteigert werden, auch wenn hierbei ausgehend von einer geringen Belastung der Verbrennungskraftmaschine, d.h. einer kleinen Kraftstoffzuführungsrate, eine Volllastbeschleunigung oder eine transiente Lastaufschaltung erfolgt. Im Vergleich dazu liegt für das Erhöhen der Luftzuführungsrate in die Brennräume eine deutliche Begrenzung vor.

Die limitierende Wirkung der Luftförderung in Bezug auf eine potenzielle Leistungssteigerung ist für die sogenannten aufgeladenen Verbrennungskraftmaschinen, die was den Nutzfahrzeugsektor anbetrifft aufgrund deutlich höherer Wirkungsgrade in den traditionellen Industrienationen seit langem eine sehr deutliche Stückzahl-Dominanz errungen haben, was sich gleichermassen in den neuen Industrienationen und den sogenannten Schwellenländern abzeichnet, stärker ausgeprägt. Zur Eindämmung der Rußbildung ist eine im Vergleich zur verfügbaren Luftmenge überproportionale Steigerung der Kraftstoffzuführung nicht oder nur in einem geringen Ausmaß möglich. Klarerweise muss im Brennraum eine ausreichende Luftmenge, genau genommen eine ausreichende Sauerstoffmenge, zur Verfügung stehen, damit in Bezug auf den zugeführten Kraftstoff rein quantitativ dessen vollständige Verbrennung überhaupt möglich ist und auch ein zündfähiges Kraftstoff-Luft-Gemisch zur Verfügung steht. Für ein zündfähiges Kraftstoff-Luft-Gemisch darf der Luftanteil aber auch nicht zu hoch sein. In Abhängigkeit der eingesetzten Kraftstoffart existiert eine gewisse Bandbreite für den Kraftstoff-Mindestanteil bis hin zu einem Kraftstoff-Maximalanteil, um ein Kraftstoff-Luft-Gemisch mit zuverlässiger Zündfähigkeit sicherzustellen. Beim Betrieb einer Verbrennungskraftmaschine übt dieses Größenverhältnis, das sogenannte Verbrennungsluftverhältnis, einen starken Einfluss auf den Wirkungsgrad sowie die maximal mögliche Abgabeleistung der Verbrennungskraftmaschine aus. Zudem hat dies Einfluss auf die Höhe der Kohlen-Wasserstoff- und Stickoxid-Emissionen.

Zur Erzielung der anfangs genannten Kriterien und der sich daraus ergebenden Vorteile sind die Verbrennungskraftmaschinen derart ausgelegt, dass die zur Abgabe hoher Leistungen benötigte Luftmenge nur dann in die Brennräume gelangen bzw. gedrängt werden kann, wenn dem Ladeluftverdichter eine ausreichend hohe mechanische Leistung zur Verfügung steht, um eine entsprechend starke Verdichtung der Luft erwirken zu können. Bei Abgasturboladern bezieht der Ladeluftverdichter seine Leistung aus der von der Abgasturbine bereitgestellten mechanischen Leistung. Somit besteht bei einer derart ausgerüsteten Verbrennungskraftmaschine im Fall eines transienten Lastanstieges und dem damit einhergehenden Bedarf einer entsprechend unmittelbaren Steigerung der Abgabeleistung die Problematik, dass dem Ladeluftverdichter zunächst keine ausreichend hohe Leistung zur Verfügung steht, um eine genügende Luftmenge, die für einen entsprechend hohen Leistungsumsatz nötig wäre, in die Brennräume hineinzudrängen. Anstelle eines unmittelbaren und schnellen Leistungsanstiegs ist lediglich eine verzögerte Leistungsanhebung möglich.

Was Flüssigkraftstoffe anbetrifft, ist bei Vorhandensein eines Vergasers bereits in vergleichsweise einfach aufgebauten Systemen rein technisch eine sehr hochdynamische Steigerung der Kraftstoff-Zuführungsrate umsetzbar. Bei Vorhandensein eines Systems zur Kraftstoff-Hochdruck-Einspritzung ist ebenfalls rein technisch eine sehr hochdynamische Steigerung der Kraftstoff-Zuführungsrate umsetzbar. In einer technischen Anwendung ist allerdings die Steigerung der Kraftstoff-Zuführungsrate nicht allein vom Kraftstoffpfad abhängig, sondern muss in Abhängigkeit von der Dynamik-Begrenztheit der Luftstrecke einschließlich einer Berücksichtigung der geltenden Emissionsvorschriften limitiert werden. Damit eine quasi vollständige Verbrennung des Kraftstoffes erzielt werden kann und/oder die Verbrennung innerhalb eines schmalen Kraftstoff-Luftverhältnis-Bereiches erfolgt, kann in denjenigen Betriebsbereichen der Verbrennungskraftmaschine, in denen lediglich eine langsame Steigerung der Luftzufuhr möglich ist, die Kraftstoff-Zuführungsrate auch nur in einem entsprechend geringen Maß gesteigert werden. Vorbekannt sind Systeme zur Verdichtung von Ladeluft, die ihre hierfür erforderliche Leistung zumindest nicht ausschließlich aus der aktuell anfallenden Abgasenergie beziehen.

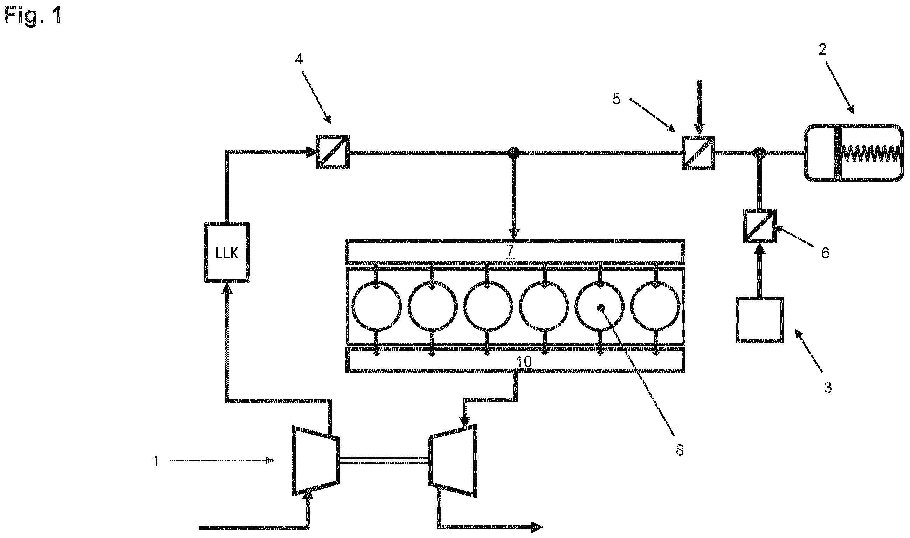

Figur 1 zeigt den Stand der Technik am Beispiel eines Sechszylinder-Reihenmotors mit einer einstufigen Aufladung über einen gewöhnlichen Abgasturbolader 1. Das Luftpfadsystem ist mit einem Druckluftspeicher 2, einer Druckluftquelle 3 zur Erzeugung von Druckluft und drei Schaltelementen 4, 5, 6 erweitert. In Abhängigkeit des Druckniveaus der im Druckluftspeicher 2 verfügbaren Luftmenge und der Volumenverhältnisse in Bezug auf das Druckluftspeicher-Innenvolumen und der entsprechenden Luftstrecke der Verbrennungskraftmaschine kann durch Öffnen des Ventils 5 dem Luftverteiler 7 bzw. den Brennräumen 8 während des geöffnet seins ihrer Einlassventile eine bereits nach einer sehr kurzen Ansprechdauer deutlich gesteigerte Luftmenge zugeführt werden. Solange der Druckluftspeicher 2 über einen entsprechend hohen Luftvorrat verfügt und ein dementsprechend ausreichend hohes Druckniveau besteht, bleibt bei geöffnetem Ventil 5 das Ventil 4 geschlossen, sodass die in das Zuleitungssystem 7 zur Luftversorgung der Verbrennungskraftmaschine zugeführte Luft ausschließlich aus dem Druckluftspeicher 2 stammt. Damit im Bedarfsfall aus diesem Druckluftspeicher 2 jeweils erneut eine deutlich gesteigerte Luftmenge für die Verbrennungskraftmaschine bereitgestellt werden kann, wird der Druckluftspeicher 2 nachgeladen, sobald der Luftbedarf zur Versorgung der Verbrennungskraftmaschine bereits durch die alleinige vom Abgasturbolader 1 ausgehende Fähigkeit einer Ladeluftverdichtung abgedeckt werden kann. Das hier vorliegende Boost-System zur Luftversorgung der Verbrennungskraftmaschine weist den Nachteil auf, dass seine Nutzung das Luftversorgungs-Hauptsystem über den Abgasturbolader 1 substituiert, und zwar genau für den Fall eines besonders hohen Luftbedarfs. Demzufolge ist zur Erreichung einer bestimmten Luftzufuhr-Erhöhung in Bezug auf den Luftmassenstrom und des für einen Boost-Vorgang verfügbaren Luftvorrates eine erheblich größere Systemauslegung des Boost-Systems erforderlich, was insbesondere für den Druckluftspeicher 2 zutrifft, erforderlich bzw. im Fall einer bestehenden Bauraumbeschränkung lediglich eine entsprechend reduzierte Boost-Fähigkeit nach sich zieht.

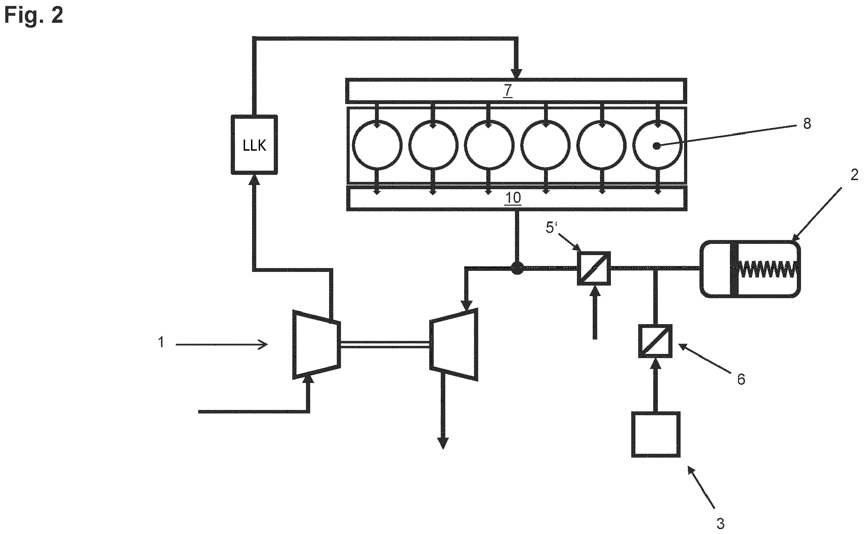

Figur 2 zeigt einen weiteren exemplarischen Stand der Technik am Beispiel eines Sechszylinder-Reihenmotors. Hinsichtlich des Luftpfades zeigt sich die Standard-Topologie einer aufgeladenen Verbrennungskraftmaschine. Für den Fall, dass der erforderliche Luftbedarf der Verbrennungskraftmaschine nicht allein durch den im Normalbetrieb arbeitenden Abgasturbolader 1 abgedeckt werden kann - d.h. die aus dem momentanen Abgasstrom mittels der Turbine des Abgasturboladers 1 entnehmbaren Leistung nicht ausreichend hoch ist, um mittels des Ladeluftverdichters des Abgasturboladers 1 eine ausreichend hohe Ladeluftmenge bereitzustellen - ist eine temporär begrenzte Steigerung der Luftzufuhr möglich. Bei Bedarf einer schnellen Steigerung der Abgabeleistung der Verbrennungskraftmaschine erfolgt eine Öffnung des Ventils 5', wodurch der Turbine des Abgasturboladers 1 zusätzlich zu dem aus dem Abgassammler 10 zuströmenden Abgas eine zusätzliche Leistung mittels der aus dem Druckluftspeicher 2 entnehmbaren Druckluft zugeführt wird. Dies wiederum führt innerhalb einer kurzen Zeitspanne zu einer deutlichen Steigerung der Luftverdichtung durch den Abgasturbolader 1, was innerhalb eines kurzen Zeitraums einen erheblichen Anstieg der Luftzuführungsmenge in die Brennräume 8 ermöglicht, was nunmehr durch eine Steigerung der Kraftstoff-Zuführungsmenge begleitet werden kann.

Gegenüber dem in System der Figur 1 weist das in Figur 2 abgebildete System zwar den Vorteil auf, dass die aus dem Druckluftspeicher 2 entnommene Druckluft additiv zur Luftversorgung der Verbrennungskraftmaschine beiträgt. Ein Nachteil des Systems der Figur 2 besteht jedoch darin, dass während des Boost-Betriebs eine Zumischung von aus dem Druckluftspeicher 2 entnommener, vergleichsweise kalter Druckluft zu dem aus dem Abgassammler 10 stammenden heißen Abgas erfolgt. Dadurch kann ein erheblicher thermischer Energieanteil des Abgases nicht mehr von der Turbine des Abgasturboladers 1 entnommen werden kann.

Sofern der Aufbau des Abgasturboladers 1 nicht derart gestaltet ist, dass ein Übertreten von Abgas in den Druckluftpfad komplett vermieden wird, muss das gesamte, aus dem Abgasturbolader 1 abströmende Gas - bestehend aus dem Motorabgas und der aus dem Druckluftspeicher 2 entnommenen Luft durch ein Abgasnachbehandlungssystem geleitet werden. Dies führt zu einer erheblichen Absenkung der Abgastemperatur und damit zu einer erheblichen Reduzierung der Wirksamkeit der Abgasnachbehandlung.

Dies kann zur Folge haben, dass unter Berücksichtigung der im Realbetrieb vorliegenden Emissionen ein der Figur 2 entsprechender Boost-Betrieb lediglich über einen vergleichsweise kurzen Zeitraum oder aber zeitweise überhaupt nicht eingesetzt werden darf und zwar bei einer vergleichsweise niedrigen Motortemperatur, die klarweise unmittelbar nach einem Motorstart nach einer längeren Stillstanddauer vorliegt, aber eben auch nach einem länger andauernden Motorbetrieb im unteren Teillastbereich, was gerade im Segment der mobilen Arbeitsmaschinen sehr häufig vorkommt. Dabei stellt ja insbesondere das Abfordern eines starken Anstiegs der Abgabeleistung ausgehend von der Situation, dass die Verbrennungskraftmaschine im unteren Teillastbetrieb arbeitet, den Anwendungsfall dar, bei dem der Boost-Betrieb eingesetzt werden soll.

Die Aufgabe der vorliegenden Erfindung besteht daher darin, eine verbesserte Vorrichtung bzw. ein Verfahren aufzuzeigen, dass eine hochdynamische Erhöhung der zugeführten Verbrennungsluft für eine aufgeladene Verbrennungskraftmaschine ermöglicht und hierbei die bestehenden Nachteile der vorbeschriebenen Systeme vermeidet.

Gelöst wird diese Aufgabe durch ein Verfahren gemäß den Merkmalen des Anspruchs 1. Vorteilhafte Ausführungen des Verfahrens sind Gegenstand der abhängigen Ansprüche.

Die Erfindung schlägt ein neuartiges Verfahren zum Betrieb einer aufgeladenen Verbrennungskraftmaschine mit wenigstens einer Zylindergruppe mit einer Anzahl n von

Brennräumen vor, wobei vorgesehen ist, während eines ersten Betriebszustandes alle n Brennräume der Zylindergruppe mit Verbrennungsluft aus einem primären Ladeluftpfad zu versorgen. Als primärer Ladeluftpfad wird der Pfad zur überwiegenden Bereitstellung der erforderlichen Ladeluft an die Verbrennungskraftmaschine verstanden. Üblicherweise handelt es sich um einen Luftpfad mit Aufladung zur Bereitstellung von verdichteter Ladeluft. Die Aufladung im primären Ladeluftpfad kann bspw. mittels eines Turboladers erfolgen, insbesondere mittels eines Abgasturboladers.

Erfindungsgemäß wird nun vorgeschlagen, während eines zweiten Betriebszustandes, insbesondere eines sogenannten Boost-Betriebes, nur einen Teil der n Brennräume über den primären Ladeluftpfad mit Verbrennungsluft zu versorgen. Durch die Reduzierung der zu versorgenden Brennräume können Letztere mit einer erhöhten Luftmenge und/oder einem höheren Ladeluftdruck aus dem primären Ladeluftpfad versorgt werden. Dem nicht aus dem primären Ladeluftpfad versorgten Teil der n Brennräume wird stattdessen während dieses zweiten Betriebszustandes ausschließlich die notwendige Verbrennungsluft aus einem gesonderten Druckluftspeicher zugeführt.

Erfindungsgemäß erfolgt also für einen zweiten Betriebszustand eine Aufteilung der Ladeluftversorgung der n Brennräume auf wenigstens zwei unterschiedliche Luftversorgungssysteme zur Bereitstellung von Verbrennungsluft. Bei derjenigen vorbekannten Lösung, bei der während des Boost-Betriebs die Luftversorgung der Brennräume über den regulären Luftpfad subsituiert wird, indem die Luftversorgung sämtlicher aktiver Brennräume ausschliesslich aus dem Druckluftspeicher erfolgt, muss das Boost-System entsprechend grösser ausgelegt werden als bei dem erfindungsgemäßen System. Grund dafür ist, dass anders als bei jener vorbekannten Lösung bei dem erfindungsgemäßen System die Versorgung aus dem Druckluftspeicher additiv zu der regulären Luftversorgung der Brennräume wirkt.

Die Anzahl n der Brennräume kann der Gesamtanzahl der Brennräume der Verbrennungskraftmaschine entsprechen. Die Anzahl n kann jedoch auch der Anzahl an Zylindern einer Zylinderreihe der Verbrennungskraftmaschine entsprechen, wobei n die Anzahl aller Zylinder der Zylinderreihe entsprechen kann oder nur einen Teil der Zylinder einer Zylinderreihe beinhaltet. Vorzugsweise handelt es sich bei den n in einer Reihe angeordneten Brennräumen um solche, die in unmittelbarer Nachbarschaft zueinander angeordnet sind; bspw. in einer gemeinsamen Reihe und dabei in unmittelbarer Nachbarschaft zueinander angeordnet sind. Die Luftverteilung kann mittels zugeordneter und voneinander getrennter Luftverteiler erfolgen. Denkbar ist es auch, dass sich die n Brennräume auf mehrere Zylinderreihen aufteilen, wobei die zu einer Zylindergruppe zusammengefassten Zylinder vorzugsweise in Bezug auf ihre jeweils eigene Reihe die gleichen Positionen aufweisen.

Die Anzahl n der Brennräume kann gerade oder ungerade sein. Sofern die erfindungsgemäße Verbrennungskraftmaschine eine gerade Anzahl von Brennräumen aufweist, kann es durchaus sinnvoll sein, dass die Anzahl derjenigen Brennräume, die während eines Boost-Betriebes über den regulären Luftpfad versorgt werden, grösser ist als die Anzahl der aus dem Luftdruckspeicher versorgten Brennräume und zwar dann, wenn im Fall eines voll ausgelasteten Boost-Betriebes ein Luftbedarf der Brennräume vorliegt, der deutlich grösser als das Doppelte gegenüber dem Luftbedarf während des Normalbetriebes ist, d.h. dem Betrieb der Verbrennungskraftmaschine bei einem deaktivierten Boost-System. Liegt hingegen für eine Anwendung während eines Boost-Betriebes auch unter maximaler Belastung nur ein mäßig erhöhter Luftbedarf der Brennräume vor, kann es sinnvoll sein, dass die Anzahl derjenigen Brennräume, die aus dem Druckluftspeicher versorgt werden, kleiner ist als die Anzahl derjenigen Brennräume, die ihre Luftversorgung immer über den regulären Luftpfad erhalten.

Sofern ein erfindungsgemäßes Boost-System bei einer solchen Verbrennungskraftmaschine zum Einsatz kommen soll, die eine gerade Anzahl von Zylindern aufweist und die entweder unter Betrieb aller Brennräume oder unter Betrieb der Hälfte aller Brennräume eingesetzt werden kann, sieht eine vorteilhafte Betriebsweise vor, dass in einem ersten Lastbereich - beginnend vom Leerlaufbetrieb bis zu einem Abgabedrehmoment von ca. 40 % Volllast - die Hälfte der Zylinder abgeschaltet ist. Tritt bei Vorliegen eines solchen Betriebes der Verbrennungskraftmaschine eine hohe Steigerung der angeforderten Abgabeleistung auf, weil bspw. eine hohe Steigerung des Abgabedrehmomentes erforderlich ist, um die momentane Drehzahl beibehalten zu können, ermöglicht eine bevorzugte Ausführungsform der erfindungsgemäßen Verbrennungskraftmaschine eine Fortführung der Luftversorgung der bereits aktiven Zylinder über den regulären Luftpfad und zu einer zusätzlichen Aktivierung der zuvor deaktivierten Zylinder, die sodann Ihre Verbrennungsluft aus dem Druckluftspeicher erhalten. Liegt bei einer solchen Verbrennungskraftmaschine eine Auslastung oberhalb dieses Abgabedrehmoment-Schwellenwertes von bspw. 40 % vor, ist ein Betrieb unter Nutzung sämtlicher Brennräume vorgesehen. Sofern die zur Leistungsabdeckung inkl. der Leistungsspitzen benötige Brennluft über den regulären Luftpfad erbracht werden kann, bleibt das Boost-System außer Kraft. Bei einem entsprechend höheren Brennluftbedarf werden gleichermaßen wie bei einer solchen erfindungsgemäßen Verbrennungskraftmaschine, bei der keine Zylinder-Deaktivierung vorgesehen ist, ein erster Teil der Brennräume über den regulären Luftpfad und der verbleibende Anteil aus dem Druckluftspeicher versorgt. Sofern bei der erfindungsgemäßen Verbrennungskraftmaschine, welche mit der Funktionalität einer Zylinder-Deaktivierung ausgestattet ist, und die in einem Beobachtungszeitraum bereits unter Einsatz aller Brennräume betrieben wird, ab einem bestimmten Zeitpunkt eine erhöhte Leistungsanforderung eintritt, erfolgt eine Aufteilung der Luftversorgung der Brennräume gleichermaßen wie einer Verbrennungskraftmaschine, bei der keine Zylinder-Deaktivierung vorgesehen ist.

Eine weitere Ausführungsform, die exemplarisch an einem 6-Zylindermotor erklärt wird, sieht vor, dass die Verbrennungskraftmaschine im unteren Lastbereich mit zwei, in einem mittleren Lastbereich mit vier und im oberen Lastbereich mit allen sechs Zylindern betrieben wird. Bevorzugt verfügt eine solche erfindungsgemäße Verbrennungskraftmaschine in Bezug auf die Brennluftzuführung über entsprechende Verbindungen, dass sämtliche Brennräume paarweise über den regulären Luftpfad versorgt werden können und gleichzeitig die jeweils gleichen Brennraum-Paare alternativ aus einem jeweils eigenen oder einem gemeinsamen Druckluftspeicher versorgt werden können. Ferner sind die besagten Luftverbindungen zwischen einem jeweiligen Brennraum-Paar mit dem regulären Luftpfad und dem entsprechenden Druckluftspeicher mit jeweils einem durch eine externe Steuereinheit ansteuerbaren Ventilen verbunden, wobei die Steuerung derart konzipiert ist, dass ein jeweiliges Brennraum-Paar seine Brennluft entweder über den primären Luftpfad oder aus dem gemeinsamen bzw. individuellen Druckluftspeicher beziehen kann.

Obgleich es nicht zum Kern der Erfindung gehört, sei erwähnt, dass eine solche erfindungsgemäße Verbrennungskraftmaschine im unteren und im mittleren Lastbereich bevorzugt unter Anwendung des gemeinhin bekannten sogenannten Skip-Firing Prinzips betrieben wird. Dennoch wird im Folgenden eine kurze exemplarische Erklärung gegeben: Unter Einsatz im mittleren Lastbereich eines solchen als Beispiel dienenden 6-Zylindermotors sieht das Skip-Firing Prinzips vor, dass innerhalb eines ersten betrachteten Zeitraums ein erstes Brennraum-Paar der Verbrennungskraftmaschine deaktiviert ist. Innerhalb eines sich daran anschließenden Zeitraums wird dieses erste Brennraum-Paar aktiviert - d.h. der jeweilige Brennraum wird im jeweils gegebenen Kurbelwellen-Winkelbereich mit Kraftstoff versorgt, dem wiederum im Fall einer fremdgezündeten Verbrennungskraftmaschine zum jeweils gegebenen Zündwinkel die externe Zündenergie zugeführt wird, damit jeweils die Entflammung des Kraftstoffes ausgelöst wird - derweil ein zweites Brennraum-Paar inaktiv ist. In einem dritten sich daran anschließenden Zeitraum bleibt das erste Brennraum-Paar weiterhin aktiv. Das zweite Brennraum-Paar wird zu Beginn dieses dritten Zeitraums aktiviert und bleibt aktiv, derweil das dritte Brennraum-Paar deaktiviert wird und inaktiv bleibt. Mit Anfang eines vierten sich direkt daran anschließenden Zeitraums beginnt eine Wiederholung des sich zuvor beschriebenen Ablaufes. Wie bereits erwähnt, bleiben die Einlass- und Auslassventile eines Zylinders während seiner Deaktivierung bevorzugt dauerhaft geschlossen. Klarerweise kann das Skip-Firing Prinzip auch dann angewendet werden, sofern zwei Brennraum-Paare deaktiviert sind, was für eine erfindungsgemäße Verbrennungskraftmaschine bei Vorliegen einer entsprechend mittleren Auslastung klarerweise bevorzugt wird. Während der Betriebsphasen einer erfindungsgemäßen Verbrennungskraftmaschine, in denen ein Teil der Brennräume inaktiv ist, kann anstatt eines zeitbedingten ein ereignisbedingtes zyklisches Austauschen der abgeschalteten Brennräume durchgeführt werden. Für den Anwendungsfall, dass bspw. jeweils zwei der drei Brennraum-Paare im aktiven Modus bleiben sollen, könnte nach einem jeweiligen Durchlaufen eines Kurbelwellenwinkels von 720° ein jeweils anderes Brennraum-Paar abgeschaltet werden und zwar jeweils bevorzugterweise genau dasjenige Brennraum-Paar, dessen Deaktivierung bereits am weitesten in der Vergangenheit zurückliegend ist. Für den Anwendungsfall, dass bspw. jeweils eines der drei Brennraum-Paare im aktiven Modus bleiben sollen, könnte nach einem jeweiligen Durchlaufen eines Kurbelwellenwinkels von 720° ein jeweils anderes Brennraum-Paar zugeschaltet werden und zwar jeweils bevorzugterweise genau dasjenige Brennraum-Paar, dessen Aktivierung bereits am weitesten in der Vergangenheit zurückliegend ist.

Sofern an einer erfindungsgemäßen Verbrennungskraftmaschine, die momentan im Zweizylinder-Betrieb arbeitet, eine plötzlich einsetzende starke Erhöhung der abgeforderten Leistung vorliegt, werden klarerweise sämtliche deaktivierten Zylinder reaktiviert. Damit die hohe bereits angeforderte bzw. abgeforderte Abgabeleistung der Verbrennungskraftmaschine möglichst unmittelbar bereitgestellt werden kann, wird die erfindungsgemäße Luftversorgung bevorzugt an den beiden unmittelbar zuvor deaktivierten Brennraum-Paaren durchgeführt.

Sofern eine erfindungsgemäße Verbrennungskraftmaschine eine gerade Anzahl n von Brennräumen aufweist, kann es durchaus sinnvoll sein, dass während eines Boost-Betriebes, die Anzahl der über den regulären Luftpfad versorgten Brennräume grösser oder kleiner als die Anzahl der aus dem Luftdruckspeicher versorgten Brennräume ist.

In einer möglichen Ausführungsform der erfindungsgemäßen Verbrennungskraftmaschine liegt im zweiten Betriebszustand eine symmetrische Aufteilung der n Brennräume auf beide Luftversorgungssysteme vor, d.h. über den primären Luftpfad wird eine identische Anzahl von Brennräumen mit der erforderlichen Verbrennungsluft versorgt wie aus dem Druckluftspeicher. Für diesen Fall stellen bei Vorliegen des zweiten Betriebszustandes diese beiden Luftversorgungssysteme ausgansseitig einen idealerweise identischen Ladeluftdruck bereit. Diesem Idealfall folgend wäre ohne eine Beschränkung auf eine Verallgemeinerung in einer bestimmten Belastungssituation der Verbrennungskraftmaschine die Luftversorgung eines Brennraumes unabhängig davon, ob dieser über den regulären Luftpfad oder aus dem Druckluftspeicher seine Brennluft erhält. Klarerweise handelt es sich bei Letzterem um eine Idealisierung. In einem anwendungsrelevanten Maßstab soll der Arbeitsablauf bzw. das vom Anwender erfahrbare Motorverhalten hinsichtlich der Luftzufuhr nicht davon abhängig sein, ob die Luftzufuhr eines jeweiligen Brennraums über den regulären Luftpfad oder aus dem Druckluftspeicher erfolgt.

In einer alternativen Ausführungsform der erfindungsgemäßen Verbrennungskraftmaschine liegt im zweiten Betriebszustand eine asymmetrische Aufteilung der n Brennräume auf beide Luftversorgungssysteme vor, d.h. auch während des Boost-Betriebs wird über den primären Luftpfad eine andere Anzahl von Brennräumen mit Verbrennungsluft versorgt als aus dem Druckluftspeicher. Klarerweise gilt auch im Fall eines derart gestalteten Luftversorgungssystems der entsprechende Sachverhalt.

Der erste und zweite Betriebszustand können durch ein oder mehrere unterschiedliche Motorbetriebsparameter bzw. Motorzustände differenziert werden. Bevorzugt erfolgt eine Unterscheidung des hier maßgeblichen Betriebszustandes anhand einer Differenz der momentanen Ist-Abgabeleistung und der angeforderten Soll-Abgabeleistung der Verbrennungskraftmaschine, wobei ein Übergang in den zweiten Betriebszustand ausgelöst wird, wenn eine entsprechende Steigerung der Soll-Leistungsabgabe erkannt wird und der Innendruck im Luftdruckspeicher ein bestimmtes Druckniveau überschreitet. In einer möglichen Ausführungsform entscheiden folgende Kriterien über das Verharren im bereits vorliegenden Betriebszustandes oder das Annehmen eines anderen Betriebszustandes:
- der an der Kurbelwelle momentan vorliegende Drehzahl-Drehmoment-Istwert
- die Solldrehzahl der Kurbelwelle
- der Luftdruck innerhalb des Luftdruckspeichers

Wie eingangs bereits erläutert wurde, wird bei einer zunehmenden Soll-Leistungsabgabe eine erhöhte Kraftstoffmenge in Kombination mit einer erhöhten Luftmenge in die Brennräume eingebracht. Bauartbedingt ist die kurzfristige Steigerung zumindest für die Ladeluftmenge limitiert, insbesondere für den Fall eines Ladeluftpfades mit Abgasturbolader, Stichwort Turboloch. Übersteigt die kurzfristig benötigte Ladeluftmenge diejenige nur durch den primären Ladeluftpfad kurzfristig bereitstellbare Luftmenge, d.h. liegt der Zeitgradient der Steigerung der Soll-Leistungsabgabe über einem spezifischen Schwellenwert, so erfolgt erfindungsgemäß ein Übergang in den zweiten Betriebszustand, wodurch ein erster Teil der n Brennräume seine Luftversorgung längs des primären Ladeluftpfades erhält und ein zweiter Teil der n Brennräume aus dem Druckluftspeicher versorgt wird. Durch dieses Konzept ist eine nahezu verzögerungsfreie Bereitstellung einer erhöhten Ladeluftmenge möglich. Neben der zeitbezogenen Zunahme der abgeforderten Abgabeleistung, d.h. dem Zeitgradienten der Abgabeleistung kann zudem der Absolutwert des Anstiegswertes der Soll-Abgabeleistung gegenüber der aktuellen Ist-Abgabeleistung.

Denkbar ist es, dass die insgesamt n Brennräume durch zwei oder eine höhere Anzahl separater Luftverteiler mit der benötigten Brennluft versorgt werden. Dabei ist vorgesehen, dass die aus dem primären Ladeluftpfad stammende Ladeluft im ersten Betriebszustand auf zwei oder mehrere separate Pfade zur parallelen Versorgung der zwei oder mehreren Luftverteiler verzweigt wird. Im zweiten Betriebszustand wird durch den primären Ladeluftpfad nur ein einziger Luftverteiler bzw. zumindest nur ein Teil der verfügbaren Ladeluftverteiler der n Brennräume mit Ladeluft versorgt. Der andere Teil der Luftverteiler wird stattdessen mit Druckluft aus dem Druckluftspeicher versorgt.

Wie bereits vorstehend bereits ausführlich dargelegt wurde, ist es denkbar, das erfindungsgemäße Verfahren, insbesondere während eines Niedriglastbetriebs, zusammen mit einer Zylinderabschaltung zu kombinieren. Kurz zusammengefasst können bei einer Deaktivierung einzelner Brennräume bzw. einer aus mehreren Brennräumen bestehenden Gruppe die verbleibenden aktiven Brennräume bei Bedarf über den primären Ladeluftpfad und über eine Luftzuführung aus dem Druckluftspeicher mit Verbrennungsluft versorgt werden.

Denkbar ist Aufladung der Druckluftspeicher durch eine gesonderte Druckluftquelle. Hierzu kann beispielsweise ein dedizierter über einen Nebenabtrieb der Verbrennungskraftmaschine angetriebener Luftpresser zum Einsatz kommen. Ein solcher Luftpresser kann über eine Ventilanordnung mit dem Druckluftspeicher in Verbindung stehen, um eine Luftzufuhr in den Druckluftspeicher dann vorzunehmen, wenn das momentan vorliegende Druckniveau im Druckluftspeicher unter einen Mindestschwellenwert absinkt. Die Luftzufuhr in den Druckluftspeicher ist sinnvollerweise durch mindestens ein Abbruchkriterium begrenzt, bspw. bis das Speicherdruckniveau einen definierbaren Zielschwellwert erreicht oder überschritten hat. Als ein ergänzendes Abbruchkriterium kann das Auftreten der Situation sein, dass sich innerhalb einer vergleichsweise kurzen Zeitspanne eine entsprechend stark ausgeprägte Erhöhung des Luftbedarfs zur Versorgung der Brennräume der Verbrennungskraftmaschine einstellt, die bei einer besonders stark ausgeprägten Erhöhung sogar dazu führt, dass vom Druckluftspeicher eine Luft-Abgabe abgefordert wird, obwohl dieser noch nicht bis zu dem entsprechenden Schwellenwert aufgeladen ist, der das Abschalten der Luftzufuhr in den Druckluftspeicher auslösen würde.

Alternativ oder ergänzend ist der Druckluftspeicher auch mit aus dem primären Ladeluftpfad bereitgestellter Luft aufladbar. Ist der Druckluftspeicher aus dem primären Ladeluftpfad und einer gesonderten Druckluftquelle aufladbar, so kann vorgesehen sein, dass eine Aufladung des Druckluftspeichers über den primären Ladeluftpfad nur in einem unteren Druckbereich erfolgt, während eine Aufladung des Druckluftspeichers über die gesonderte Druckluftquelle solange erfolgt, bis wenigstens ein Abbruchkriterium, insbesondere der Zielschwellwert des Speicher-Innendruckes erreicht oder überschritten ist.

Gemäß bevorzugter Ausführung wird im zweiten Betriebszustand nicht nur die aus dem Druckluftspeicher bereitgestellte Luftmenge bzw. der Luftdruck gesteuert oder geregelt, sondern zusätzlich kann mittels einer gesteuerten oder geregelten Aktuatorik ein koordinierter Einfluss auf die Luftzufuhr durch den primären und den sekundären Luftpfad in die Brennraumgruppen möglich sein. Ziel ist insbesondere die Bereitstellung von aufeinander abgestimmten Druckniveaus im primären und sekundären Ladeluftpfad. Mit dem sekundären Luftpfad ist die Luftversorgung gemeint, die durch eine Druckluftentnahme aus dem Druckluftspeicher erfolgt. Der primäre Ladeluftpfad kann eine einstufige oder mehrstufige Verdichtung aufweisen, wobei wenigstens eine Verdichterstufe ansteuerbar ist. Eine Ansteuerbarkeit lässt sich bspw. durch die Verwendung eines Ladeluftverdichters erzielen, der mit einer mittels einer Steuerung und/oder Regelung vorgebbaren variablen Drehzahl betrieben werden kann. Vorstellbar ist eine Kombination aus einem Verdichter eines Abgasturboladers mit einem nachgeschalteten zweiten variabel betreibbaren Ladeluftverdichter. Letzterer kann durch eine Steuerung oder Regelung bedarfsgerecht einstellbar sein. Konkret wird die Verwendung eines elektrisch angetriebenen Ladeluftverdichters vorgeschlagen, der strömungsabwärts des Verdichters des Abgasturboladers in den primären Ladeluftpfad integriert ist.

Gemäß einer vorteilhaften Modifikation des Verfahren kann die im Druckluftspeicher gespeicherte Luft bei Bedarf unter Verwendung einer geeigneten Heizvorrichtung erwärmt, insbesondere auf ein definiertes Temperaturniveau vorgewärmt werden. Unter Verfügbarkeit dieser vorgewärmten Luft für einen Kaltstart lässt sich die sogenannte Kaltstartfähigkeit deutlich verbessern. Denkbar ist die Verwendung einer geeigneten Heizvorrichtung zur Erwärmung der gespeicherten Luft.

Besonders vorteilhaft ist die Bereitstellung von Druckluft im Druckluftspeicher mit einem erhöhten Temperaturniveau während eines Kaltstarts der Verbrennungskraftmaschine. Vor diesem Hintergrund ist es vorteilhaft, wenn während eines dritten Betriebszustandes, insbesondere während eines Kaltstarts der Verbrennungskraftmaschine, nur denjenigen Brennräume der n Brennräume mit Kraftstoff versorgt werden, die ihre Verbrennungsluft aus dem Druckluftspeicher beziehen. Es wird also vorgeschlagen, im dritten Betriebszustand zumindest einen Teil der n Brennräume mit Verbrennungsluft aus dem Druckluftspeicher zu versorgen. Weiterhin soll dann nur diesen, aus dem Druckluftspeicher versorgten Brennräumen Kraftstoff zugeführt werden, der verbleibende Teil der n Brennräume bleibt demzufolge inaktiv im dritten Betriebszustand.

Die gestellte Aufgabe der vorliegenden Erfindung wird nicht allein durch das erfindungsgemäße Verfahren gelöst, sondern auch durch eine Vorrichtung gemäß den Merkmalen des Anspruchs 12. Vorteilhafte Ausführungen der Vorrichtung sind Gegenstand der abhängigen Ansprüche.

Erfindungsgemäß wird vorgeschlagen, dass eine solche Vorrichtung zwei oder mehr separate Luftverteiler aufweist und ein aufladbarer primärer Ladeluftpfad zur Versorgung der n Brennräume mit der benötigten Verbrennungsluft vorgesehen ist. In Ergänzung dazu ist erfindungsgemäß wenigstens ein Druckluftspeicher vorgesehen. Mittels einer integralen Ventilanordnung der Vorrichtung besteht die Möglichkeit, eine Ladeluftzufuhr in mindestens einen der zwei oder mehr Luftverteiler wahlweise nur durch den primären Ladeluftpfad zu ermöglichen oder alternativ eine Ladeluftzufuhr über den primären Ladeluftpfad lediglich nur einem Teil der Luftverteiler zu ermöglichen, derweil dem verbleibenden Teil oder einer Gruppe des verbleibenden Teiles der Luftverteiler eine Versorgung mit Verbrennungsluft, die aus dem Druckluftspeicher entnommen wird, erfolgt. Besonders vorteilhaft ist es, wenn die Vorrichtung eine entsprechende Steuerung bzw. Regelung aufweist, die derart konfiguriert ist, um das erfindungsgemäße Verfahren gemäß den vorstehenden Ausführungen umsetzen zu können. Die Vorteile und Eigenschaften der Vorrichtung entsprechen demzufolge den vorgenannten Ausführungen, weshalb an dieser Stelle auf eine wiederholende Beschreibung verzichtet wird.

Denkbar ist es beispielsweise, dass der Druckluftspeicher über wenigstens ein Steuerventil, welches im Folgetext als Druckluftsteuerventil bezeichnet wird, mit wenigstens einem der Luftverteiler in Verbindung steht. Mittels des Druckluftsteuerventils kann eingestellt werden, ob aus dem Druckluftspeicher Verbrennungsluft in einen der Luftverteiler abgegeben wird oder stattdessen die Fluidverbindung vollständig gesperrt bleibt, wodurch in jenem zweiten Fall eine Versorgung der n Brennräume ausschließlich über den primären Ladeluftpfad erfolgt. Denkbar ist ebenso die Verwendung eines Proportionalventils als Druckluftsteuerventil, um das Beziehen eines bedarfsgerechten Luftmassenstromes aus dem Druckluftspeicher erwirken zu können. Insbesondere ist ein solches Druckluftsteuerventil über eine Schnittstelle extern ansteuerbar, insbesondere durch die vorgeschlagene Steuerung zur Ausführung des Verfahrens.

Denkbar ist es ebenso, dass der primäre Ladeluftpfad, insbesondere stromabwärts eines Ladeluftkühlers, dauerhaft in Fluidverbindung mit wenigstens einem bzw. einem Teil der Luftverteiler steht. Mit dem verbleibenden Teil der Luftverteiler steht der primäre Ladeluftpfad stattdessen über wenigstens ein Steuerventil, welches im Folgetext als Ladeluftsteuerventil bezeichnet wird, in Verbindung, um die aus dem primären Ladeluftpfad an den verbleibenden Teil der Luftverteiler abgegebene Luftmenge vorzugsweise variabel einstellen bzw. vollständig unterbinden zu können. Denkbar ist eine Direktverbindung zwischen Ladeluftsteuerventil und Druckluftsteuerventil. Im einfachsten Fall kann das Ladeluftsteuerventil als einfaches Rückschlagventil, insbesondere als passives Rückschlagventil ausgeführt sein. Im Fall eines als passives Rückschlagventil ausgeführten Ladeluftsteuerventils ist dessen Dimensionierung vorzugsweise derart gewählt, damit ein Öffnen des Druckluftsteuerventils das Schließen des Ladeluftsteuerventils auslöst. Insbesondere bewirkt die durch das Öffnen des Druckluftsteuerventils erzeugte Druckerhöhung im betreffenden Leitungsabschnitt des Luftpfades ein automatisches Schließen des Ladeluftsteuerventils, wodurch eine Luftversorgung der mit dem Druckluftspeicher in Verbindung stehenden Luftverteiler ausschließlich aus dem Druckluftspeicher erfolgt. Wird stattdessen die Fluidverbindung zum Druckluftspeicher mittels des Druckluftsteuerventils geschlossen, öffnet das als passives Rückschlagventil ausgeführte Ladeluftsteuerventil vollständig, sodass eine Luftversorgung aller Ladeluftverteiler aus dem primären Ladeluftpfad erfolgen kann. Ergänzend sei bemerkt, dass eine Öffnung des Druckluftsteuerventils klarerweise lediglich dann vorgesehen ist, sofern im Druckluftspeicher ein ausreichend hohes Druckniveau besteht.

Wie bereits eingangs angedeutet, kann der Druckluftspeicher über eine gesonderte Druckluftquelle aufladbar sein. Hierfür kann ein dedizierter Luftpresser zur Verfügung stehen. Der Luftpresser kann über einen Nebenabtrieb der Verbrennungskraftmaschine angetrieben sein. Der Luftpresser kann ebenso mit einer Ventilanordnung mit dem Druckluftspeicher in Verbindung stehen, um eine gesteuerte Aufladung des Speichers mittels des Luftpressers zu ermöglichen.

Ebenso kann vorgesehen sein, dass die Vorrichtung im primären Ladeluftpfad eine mehrstufige Verdichtung vorsieht, insbesondere einen in Strömungsrichtung zuerst angeordneten Abgasturbolader, der eine erste Stufe der Verdichtung der Ladeluft erzeugt. Stromabwärts des Abgasturboladers kann wenigstens ein zusätzlicher Ladeluftverdichter nachgeschaltet sein, insbesondere ein elektrisch angetriebener Ladeluftverdichter. Zwischen beiden Ladeluftverdichtern kann wenigstens einen Ladeluftkühler integriert sein. Vorstellbar ist es ebenso, dass wenigstens ein Ladeluftkühler stromabwärts der mehrstufigen Verdichtung eingebunden ist.

Neben der erfindungsgemäßen Vorrichtung betrifft die Erfindung eine Verbrennungskraftmaschine mit einer entsprechenden Vorrichtung gemäß der Erfindung. Die vorstehenden Ausführungen zur Vorrichtung geltend gleichermaßen bezüglich der Verbrennungskraftmaschine, weshalb sich an dieser Stelle eine ergänzende Beschreibung der Verbrennungskraftmaschine als entbehrlich erweist.

Vorstellbar ist zudem, dass die Verbrennungskraftmaschine mehrere Brennraumgruppen mit jeweils einer Anzahl n von Brennräumen umfasst, bspw. Zylindergruppen mit jeweils n in einer Reihe oder in vorzugsweise jeweils benachbarten Positionen zweier Reihen angeordneten Brennräumen. Jede dieser Brennraumgruppe kann dann eine erfindungsgemäße Vorrichtung aufweisen, d.h. es steht pro Brennraumgruppe jeweils ein separater primärer Ladeluftpfad mit eigenständiger Aufladung zur Verfügung. Zudem kann für jede Brennraumgruppe jeweils ein eigener Druckluftspeicher vorgesehen sein. Denkbar ist an dieser Stelle jedoch auch eine gemeinsame Verwendung eines Druckluftspeichers für mehrere Brennraumgruppen. Für jede Brennraumgruppe kann das erfindungsgemäße Verfahren mittels der separaten Vorrichtungen unabhängig voneinander ausgeführt werden. Eine übergeordnete Steuerung oder Regelung für alle an einer Verbrennungskraftmaschine genutzten Vorrichtungen ist jedoch bevorzugt.

Umfasst die Verbrennungskraftmaschine erfindungsgemäße Vorrichtungen mit wenigstens zwei separaten Druckluftspeichern, so bietet es sich an, dass die Druckluftspeicher der wenigstens zwei Vorrichtungen durch eine gemeinsame externe Druckquelle, insbesondere einen gemeinsamen Luftpresser aufladbar sind.

Von der Anmeldung umfasst ist auch ein übergeordnetes System, in dem eine erfindungsgemäße Verbrennungskraftmaschine zum Einsatz kommt. Hierbei kann es sich um mobile, stationäre und portable Anwendungen handeln. Beispielsweise kann es sich bei einer mobilen Anwendung um ein Straßenfahrzeug eine Off-Highway Anwendung, ein Wasser- oder Luftfahrzeug handeln.

Weitere Vorteile und Eigenschaften der Erfindung sollen nachfolgend anhand eines in den Figuren dargestellten Ausführungsbeispiels näher erläutert werden. Es zeigen:
- Figur 1:: ein erstes Ausführungsbeispiel einer Verbrennungskraftmaschine gemäß dem Stand der Technik,
- Figur 2:: ein zweites Ausführungsbeispiel einer aus dem Stand der Technik bekannten Verbrennungskraftmaschine,
- Figur 3:: ein erstes Ausführungsbeispiel einer erfindungsgemäßen Verrennungskraftmaschine,
- Figur 4:: ein zweites Ausführungsbeispiel einer erfindungsgemäßen Verbrennungskraftmaschine,
- Figur 5:: eine schematische Darstellung zur Verdeutlichung der Kombination des erfindungsgemäßen Verfahrens mit einer möglichen Zylinderabschaltung und
- Figur 6:: ein drittes Ausführungsbeispiel einer erfindungsgemäßen Verbrennungskraftmaschine,
- Figur 7:: ein viertes Ausführungsbeispiel einer erfindungsgemäßen Verbrennungskraftmaschine.

Ein Verfahren bzw. eine Vorrichtung zur Dynamikerhöhung einer Verbrennungskraftmaschine stellt einen wesentlichen Kernaspekt der Erfindung dar. Ein wichtiger Bestandteil der Erfindung ist wenigstens ein zusätzlicher Druckluftspeicher, aus dem temporär und additiv zum primären Ladeluftpfad Verbrennungsluft den Brennräumen zuführbar ist. Bei einer Anforderung einer entsprechend stark ausgeprägten Steigerung der Sollabgabeleistung der Verbrennungskraftmaschine - präziser ausgedrückt im Fall eines entsprechend starken Niveauanstiegs der Sollabgabeleistung bei Vorliegen eines großen Zeitgradienten, - erfolgt zur besseren Überwindung des sogenannten Turboloches ein Boost-Vorgang, bei dem aus dem Druckluftspeicher Druckluft entnommen und als zusätzliche Ladeluft genutzt wird, d.h. der über den regulären (primären) Luftpfad zuströmenden Ladeluft additiv hinzugefügt wird. Abgestimmt auf die Menge der erhöhten Luftzufuhr in die Brennräume erfolgt eine Steigerung der Kraftstoffzufuhr.

Der Erfindungskern zeigt sich in der Gesamt-Topologie des Luftpfades auf der Komponentenebene. Die Anordnung einer erfindungsgemäßen Topologie bewirkt, dass die während eines Boost-Vorgangs bereitgestellte Druckluft bereits direkt der Verbrennung zugeführt wird; jedoch dabei nur einem Teil der vorhandenen Brennräume der Verbrennungskraftmaschine zugeführt wird, wohingegen die verbleibenden anderen oder ein Teil der verbleibenden Brennräume ihre Ladeluft weiterhin über den regulären Luftpfad beziehen, d.h. denjenigen Luftpfad, auf den der Ladeluftverdichter des Abgasturboladers einwirkt.

Das bietet den grossen Vorteil, dass auch während eines Boost-Vorgangs, bei dem die Gesamt-Luftzufuhr der Brennräume durch das Entnehmen von Druckluft aus dem Druckluftspeicher unterstützt wird und dabei
(i) der momentan verfügbare Luftmassenstrom, der über den regulären Luftpfad verfügbar ist, weiterhin genutzt werden kann und gleichzeitig
(ii) die zusätzlich aus dem Druckluftspeicher entnommene Luftmenge direkt in die betreffenden Brennräume der Verbrennungskraftmaschine zugeführt werden kann, d.h. bereits additiv auf der Luftseite nutzbar ist und somit
(iii) die Turbine des Abgasturboladers unverzüglich eine höhere Energieentnahme aus dem Abgas vollziehen kann.

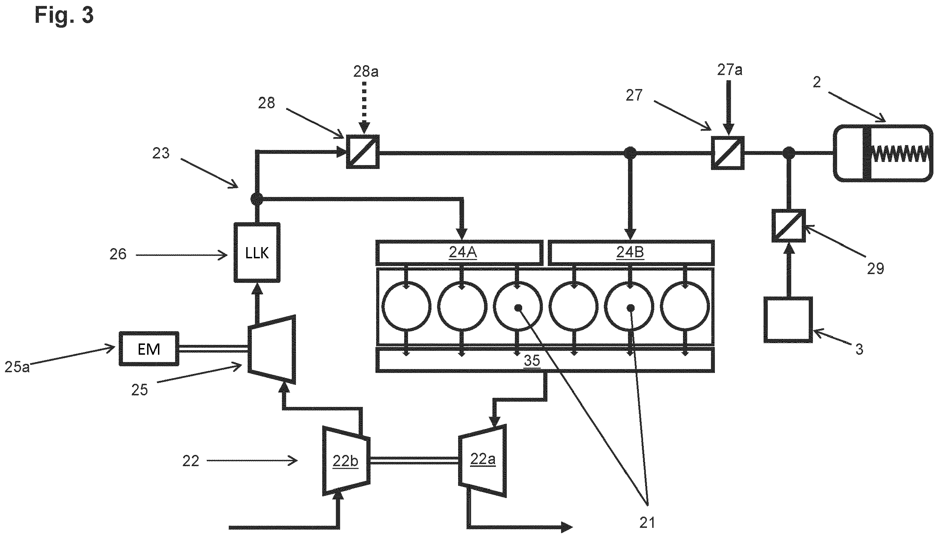

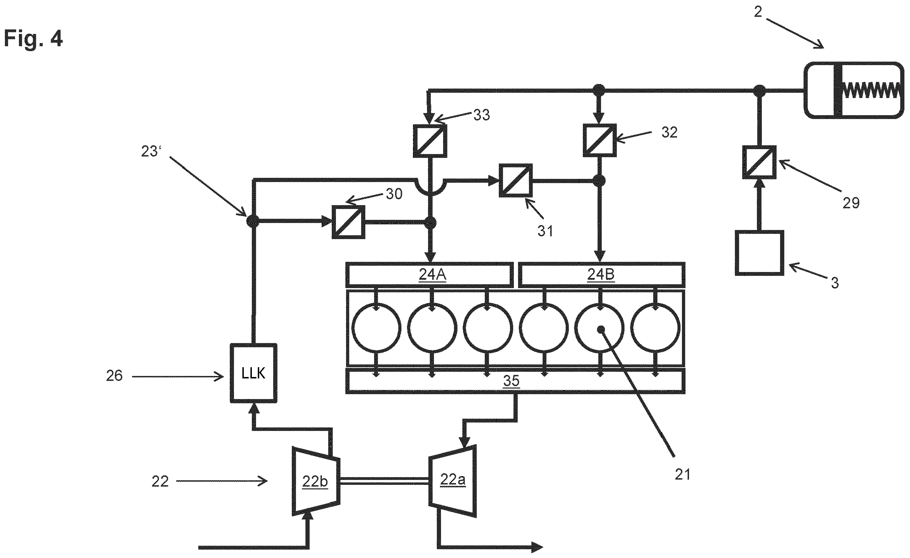

Das jeweils konkrete Ausführungsbeispiel der Figuren 3, 4 zeigt exemplarisch einen Sechszylinder-Reihenmotor. In einer einfachen Ausführungsform handelt es sich um eine mittels Abgasturbolader 22 einstufig aufgeladene Verbrennungskraftmaschine. Der Abgasturbolader 22 umfasst eine Turbine 22a, die durch das aus dem Abgassammler 35 zugeführte Abgas angetrieben wird. Die hierdurch verfügbare mechanische Leistung treibt den Ladeluftverdichter 22b an. Eine Aufspaltung 23, 23' des sich über den Ladeluftverdichter 22b erstreckenden Luftpfades sorgt dafür, dass jeweils eine Gruppe von Brennräumen 21 über voneinander abgetrennte Luftverteiler 24A und 24B mit Luft versorgt werden. Der Bereitstellung von Ladeluft über den Ladeluftverdichter 22b wird im gezeigten Ausführungsbeispiel als primärer Ladeluftpfad bzw. regulärer Ladeluftpfad verstanden.

In einer Grundbetrachtung der Erfindung kann der in Figur 3 gezeigte zweite Ladeluftverdichter 25 außer Acht gelassen werden. Hierzu erfolgen später noch Detailausführungen im Rahmen eines modifizierten Ausführungsbeispiels. Ist ein zusätzlicher zweiter Ladeluftverdichter 25 nicht vorgesehen, so ist hinsichtlich des Luftpfades die Oberdruckseite des Ladeluftverdichters 22b des Abgasturboladers 22 am Eingang des Ladeluftkühlers 26 angeschlossen. Bei einem geschlossenen Druckluftsteuerventil 27 erfolgt die Luftzuführung der aktivierten Brennräume 21 ausschließlich über den Ladeluftverdichter 22b, wobei es in einer möglichen Ausführungsform der Erfindung vorgesehen ist, dass im Normalbetrieb der Verbrennungskraftmaschine das Ladeluftsteuerventil 28 dauerhaft geöffnet ist. Daher kann dieses in einer einfachen Ausführungsform als passives Rückschlagventil ausgeführt sein, welches im Fall eines höheren Druckes auf seiner rechten Seite gegenüber seiner linken Seite den Luftpfad, der sich ausgehend von dem Ladeluftverdichter 22b zum Luftverteiler 24B erstreckt, sperrt und andernfalls diesen Luftpfad freigibt.

In einer alternativen Ausführungsform, die allerdings nicht im zentralen Fokus der Erfindung steht, kann das Ladeluftsteuerventil 28 über eine optionale Schnittstelle 28a extern ansteuerbar sein. Durch eine solche externe Ansteuerung 28a kann das Schließen des Ladeluftsteuerventils 28 auch dann ermöglicht werden, wenn rechtsseitig davon kein Überdruck herrscht. Allerdings wird die Benutzung eines solchen Ventiltyps bevorzugt, der im Fall eines rechtsseitig zum Ladeluftsteuerventil 28 herrschenden Überdrucks gegenüber dem linksseitig anliegenden Druckniveau selbsttätig schließt und solange geschlossen bleibt, bis das rechtseitige Druckniveau einen Wert unterschreitet, der geringfügig grösser als der des linksseitigen Druckniveaus ist. Insbesondere wird eine solche Ausführungsform des Ladeluftsteuerventils 28 bevorzugt, die bei Auftreten einer rechtsseitig daran ankommenden Druckwelle mit einem entsprechend stark ausgeprägten Druckniveau innerhalb einer möglichst kurzen Zeit schließt.

Bevorzugt ist die erfindungsgemäße Vorrichtung derart ausgeführt, dass sich bei einem geöffneten Ladeluftsteuerventil 28 eine möglichst gleichmäßige Luftaufteilung zwischen den einzelnen Luftverteilern 24A, 24B sowie zwischen den Brennräumen 21 einstellt. Etwas präziser ausgedrückt soll die erfindungsgemäße Vorrichtung bevorzugt entsprechend ausgeführt sein, dass bei Vorliegen eines geöffneten Ladeluftsteuerventils 28 und eines geschlossenen Druckluftsteuerventils 27 die Luftversorgung eines Brennraums unabhängig davon ist, ob dieser über den Luftverteiler 24A oder 24B seine Brennluft erhält unter der Voraussetzung, dass alle anderen Einflussparameter gleich sind, wie etwa die Luftventil-Steuerzeiten, der Druck der Ladeluft am Ladeluft-Ausgang des Abgasturboladers etc.

Sofern das von der Verbrennungskraftmaschine zu erbringende Lastprofil eine vergleichsweise geringe Dynamik aufweist und momentan bzw. generell kein Aufladen des Druckluftspeichers 2 unter Nutzung des Ladeluftverdichters 22b vorgesehen ist, bleibt das Druckluftsteuerventil 27 geschlossen. Der rechtsseitige Anschluss des Druckluftsteuerventils 27 ist mit einem Druckluftspeicher 2 verbunden. Alternativ oder ergänzend kann der Druckluftspeicher 2 über eine Druckluftquelle 3, bspw. einen Luftpresser, aufgeladen werden. Die Druckluftquelle 3 steht über ein Rückschlagventil 29 mit dem Druckluftspeicher 2 in Verbindung. Eine Luftzuführung aus der Druckluftquelle 3 ist vorgesehen, wenn das Druckniveau im Druckspeicher 2 einen gewissen Schwellenwert S1 unterschritten hat und wird solange fortgeführt, bis ein gewisser Schwellenwert S2 erreicht worden ist.

Das Öffnen und Schließen des Druckluftsteuerventils 27 erfolgt per Fernwirken über die Steuerschnittstelle 27a und wird über ein Steuerungssystem bestimmt. Im Fall eines Ausbleibens des Steuersignals für das Druckluftsteuerventil 27 soll sich dieses schließen und dauerhaft geschlossen bleiben.

Sofern eine entsprechend schnelle Steigerung der Leistungsabgabe um einen entsprechend hohen Absolutbetrag von der Verbrennungskraftmaschine abgefordert wird, bewirkt das Eingreifen des erfindungsgemäßen Systems eine erhöhte Dynamik für eine Steigerung ihrer Abgabeleistung, wobei jene Dynamik-Erhöhung abhängig von dem momentan vorliegenden Drehzahl-Drehmomenten-Betriebspunkt ist. Unter Einsatz des erfindungsgemäßen Systems erfolgt auch im Fall von abgeforderten Leistungsanstiegen, die extrem schwer bis quasi überhaupt nicht erfüllbar sind, eine sehr deutliche Annäherung an die Sollvorgabe des Drehzahl-Drehmomenten-Trajektorienverlaufes.

Das Vorliegen eines entsprechend stark ausgeprägten Zeitgradienten der Soll-Abgabeleistung um einen entsprechend hohen Absolutbetrag führt zum Öffnen des Druckluftsteuerventils 27. Dies wiederum löst eine Druckwelle aus, die das Ladeluftsteuerventill 28 erreicht, was dessen Schließung bewirkt. Als Folge erreicht die über den regulären Luftpfad bereitgestellte Ladeluft nur die hier gezeigten drei linken Brennräumen 21, die an den Luftverteiler 24A angeschlossen sind, wohingegen die drei rechten Brennräume 21 ihre Ladeluft ausschließlich aus dem Druckluftspeicher 2 über den Luftverteiler 24B beziehen. Eine solche Option ermöglicht eine sehr deutliche Erhöhung der Luftzuführung der Brennräume 21 der Verbrennungskraftmaschine und das innerhalb einer sehr kurzen Reaktionszeit.

In einer bevorzugten Ausführungsform befindet sich innerhalb des Luftpfades vom Druckluftspeicher 2 ein Druckluftsteuerventil 27, welches insbesondere als ein regelbares Druckluftsteuerventil 27 ausgeführt bzw. in einen Regelkreis eingebettet ist. Darauf aufbauend kann das System auf eine möglichst gleichmäßige Luftaufteilung zwischen den beiden Luftverteilern 24A, 24B und damit den entsprechenden Brennraumgruppen ausgelegt werden. Eine Luftzufuhr, die Zyklen-bezogen eine für jeden Brennraum 21 idealerweise die gleiche Menge aufweist, ergibt sich klarerweise nur in einem Stationärbetrieb der Verbrennungskraftmaschine.

Damit die Möglichkeit eines quasi sprunghaften Anstieges auf eine sehr deutlich gesteigerte Luftzuführungsmenge zur Erreichung einer gewünschten Dynamikerhöhung der Abgabeleistung einer Verbrennungskraftmaschine nutzbar ist, muss diese mit einem System zur Kraftstoffzuführung ausgerüstet sein, welches eine entsprechend dynamische Erhöhung der Kraftstoffzuführungsrate ermöglicht.

Wie bereits vorstehend angedeutet, ist der in der Figur 3 gezeigte als weitere Verdichterstufe wirkende zweite Ladeluftverdichter 25 lediglich optional. Bei einer zweistufigen Aufladung kann der primäre Luftpfad - wie in Figur 3 dargestellt - in Bezug auf die Luftströmungsrichtung zwischen dem ersten Ladeluftverdichter 22b und dem zweiten Ladeluftverdichter 25 einen sogenannten Zwischenkühler (in der Figur 3 nicht vorhanden) aufweisen, wobei das Zuführen von Kühlleistung resp. das Abführen von Abwärme vorzugsweise bedarfsgerecht erfolgt. Das Antreiben des zweiten Ladeluftverdichters 25 kann z.B. mittels Elektromotor 25a erfolgen.

Sofern die Verbrennungskraftmaschine in einem unteren bis mittleren Lastbetrieb und bei einer vergleichsweise geringen Dynamik arbeitet, erfolgt die Luftversorgung der n Brennräume 21 bevorzugt unter alleiniger Nutzung des Ladeluftverdichters 22b des Abgasturboladers 22. Selbstverständlich ist eine temporäre Umgehung der Verdichtungsstufe des Ladeluftverdichters 25 strömungstechnisch von Vorteil, sofern die von der Verbrennungskraftmaschine benötigte Ladeluft bereits unter einer alleinigen Nutzung des Ladeluftverdichters 22b erbracht werden kann. Zwecks Vereinfachung ist jener Bypass nicht im Schaltbild der Figur 3 gezeigt.

Im Fall von kurzeitig auftretenden, von der Verbrennungskraftmaschine abgeforderten Leistungsspitzen wird in Abhängigkeit des Zeitgradienten und der Amplitude einer jeweiligen Leistungsspitze sowie in Abhängigkeit der Systemauslegungen des bedarfsgerecht betreibbaren Ladeluftverdichters 25 und der Vorrichtung, mit der mittels einer Druckluft-Entnahme aus dem Druckluftspeicher 2 eine Erhöhung der Luftzufuhr in die Brennräume 21 der Verbrennungskraftmaschine möglich ist, eines dieser beiden Boost-Systeme oder beide Boost-Systeme ([a] der bedarfsgerecht betreibbare Ladeluftverdichter 25 und [b] das System, welches unter einer Druckluftentnahme aus dem Druckluftspeicher 2 eine Erhöhung der Luftzuführungsmenge in die Brennräume 21 der Verbrennungskraftmaschine ermöglicht) genutzt, um mittels einer dadurch möglichen bzw. zulässigen Erhöhung der Kraftstoff-Einspritzmenge eine verkürzte Anstiegszeit der Leistungsabgabe der Verbrennungskraftmaschine zu erlangen. Das Entsprechende gilt, wenn ein entsprechend stark ausgeprägter Zeitgradient der Abgabeleistung der Verbrennungskraftmaschine vorliegt, um entsprechend kurzfristig ein erhöhtes Niveau ihrer Abgabeleistung gemäß der Sollvorgabe bereitstellen zu können.

Wie in der Fig. 3 erkennbar, kann in diesem Ausführungsbeispiel die aus dem Druckluftspeicher 2 entnehmbare Druckluft lediglich den drei rechtsseitig angeordneten Brennräumen 21 zugeführt werden, derweil die über den Ladeluftverdichter 22b des Abgasturboladers 22 und die über den bedarfsgerecht betreibbaren Ladeluftverdichter 25 gemeinsame Luftzufuhr in sämtliche Brennräume 21 oder alternativ in die drei linken über den Luftverteiler 24a erreichbaren Brennräume 21 zuführbar ist. Demzufolge besteht bei einer vorteilhaften Auslegung der Zusammenhang, dass - selbstverständlich unter der Voraussetzung eines geladenen Druckluftspeichers 2 - ausgehend vom Druckluftspeicher 2 eine Luftversorgung der drei rechtsseitig angeordneten Brennräume 21 möglich ist, die in etwa genauso hoch ist, wie die Luftversorgung der drei linksseitig angeordneten Brennräume 21 durch einen gemeinsamen Einsatz des Abgasturboladers 22 und des über den bedarfsgerecht betreibbaren zweiten Ladeluftverdichters 25. Alternativ oder ergänzend besteht bei einer vorteilhaften Auslegung der Zusammenhang, dass innerhalb einer Bandbreite der Leistungsabgabe der Verbrennungskraftmaschine, in der der überwiegende oder der deutlich überwiegende Energieumsatz der Verbrennungskraftmaschine vorliegt, die Luftversorgung der Brennräume 21 in Bezug auf einen Betrieb mit einer mäßigen Dynamik, unter alleinigem Einsatz des Abgasturboladers 22 abgedeckt werden kann. Alternativ oder ergänzend besteht bei einer vorteilhaften Auslegung der Zusammenhang, dass die Luftversorgung der Brennräume 21, die über einen längeren Zeitraum erforderlich ist - beginnend von einer Größenordnung von bspw. 10 Sekunden bis hin zu einem Dauerbetrieb unter einem gleichzeitigen Einsatz des Abgasturboladers 22 und des bedarfsgerecht betreibbaren Ladeluftverdichters 25 abgedeckt werden kann.

Sofern die Motoranwendung einen Betrieb des elektrisch angetriebenen Ladeluftverdichters 25 auch außerhalb von kurzen Beschleunigungsvorgängen vorsieht, bietet sich die Integration eines sogenannten Zwischenkühlers im primären Luftpfad an, d.h. eines Kühlers, der von dem Ladeluftstrom nach dem Verlassen des Kompressors 22b des Abgasturboladers 22 und vor dem Einströmen in den extern angetriebenen Ladeluftverdichter 25 durchströmt wird.

Ein solches Gesamtsystem, bei dem die Luftzuführung in die Brennräume 21 - wie zuvor beschreiben - dreiteilig gestaffelt durchgeführt wird, bietet den Vorteil, dass der Abgasturbolader 22 und der zusätzlich zuschaltbare Ladeluftverdichter 25 innerhalb eines eingeschränkten Betriebsbereiches arbeiten und dementsprechend günstiger ausgelegt werden können und/oder im Kollektiv unter einem höheren Wirkungsgrad betrieben werden. Innerhalb eines bestimmten Bereiches (i) in Bezug auf die Höhe des zur Unterstützung des Abgasturboladers 22 benötigten Luftmassenstroms und (ii) bis zu einer bestimmten Dauer dieser Unterstützung kann diese wahlweise unter Nutzung des bedarfsgerecht betreibbaren zweiten Ladeluftverdichters 25 und/oder der aus dem Druckluftspeicher 2 beziehbaren Druckluft betrieben werden. Der hierbei bestehende Freiheitsgrad bietet ein gewisses Optimierungspotenzial, welches unter Berücksichtigung eines oder unter verschiedenen Aspekten eine Auswahl trifft, ob eine kurzfristige Unterstützung des Abgasturboladers 22 zur Luftversorgung der Brennräume 21 mittels der Nutzung des bedarfsgerecht betreibbaren zweiten Ladeluftverdichters 25 oder der aus dem Druckluftspeicher 2 beziehbaren Druckluft oder eine bestimmte Aufteilung zwischen diesen beiden Systemen hinsichtlich Luftzufuhr erfolgen soll. Mögliche Kriterien einer solchen Aufteilung sind ohne Anspruch auf Vollständigkeit eine energetische Betrachtung, eine Verschleißbetrachtung, etc. Entsprechende Betrachtungen können im einfachsten Fall anhand eines abgeschätzten Konstantwertes, in einer etwas differenzierten Betrachtung mittels eines Kennfeldes oder durch eine sogenannte Kostenfunktion, die in einer bevorzugten Ausführung sogar eine Komponenten-Alterung bzw. eine extrapolierte Komponenten-Restnutzungsdauer berücksichtigt, vorgenommen werden.

Das erfindungsgemäße Boost-System kann ebenso vorteilhaft für eine Verbrennungskraftmaschine eingesetzt werden, die entsprechend ausgestattet ist, um während ihres Teillastbetriebes eine Deaktivierung einer Zylindergruppe, die mindestens einen Zylinder enthält, zu ermöglichen. Ein hierfür ausgelegtes Ausführungsbeispiel ist in Figur 4 abgebildet. Auch hier wird, wie in Figur 3, das Prinzip anhand eines 6-Zylinder Reihenmotors erläutert. Solche in Bezug auf ihr Einwirken auf das Gesamtsystem funktional gleiche Bauteile werden in den Figuren 3 und 4 mit identischen Bezugszeichen gekennzeichnet.

Auch die Verbrennungskraftmaschine der Figur 4 verfügt über zwei separate Luftverteiler 24A und 24B. Wird die Verbrennungskraftmaschine bereits seit einer geraumen Zeit im oberen Lastbereich betrieben, sind die beiden Ladeluftsteuerventile 30 und 31 geöffnet, sodass strömungsabwärts des Ladeluftverdichters 22b zwar eine Aufspaltung 23' des Ladeluftstroms in zwei Teilströme erfolgt, aber dennoch sämtliche Brennräume 21 ausschließlich von der über den Ladeluftverdichter 22b des Abgasturboladers 22 komprimierten Luft versorgt werden. In einem unteren Teillastbetrieb der Verbrennungskraftmaschine liegt eine entsprechende Stellung der Ladeluftsteuerventile 30 und 31 vor (nur eines der Ladeluftsteuerventile 30, 31 ist geöffnet), bei der die Ladeluft entweder in diejenigen Brennräume 21 gelangt, die über den Luftverteiler 24A zugänglich sind oder in diejenigen über den Luftverteiler 24B erreichbaren Brennräume 21. Die Druckluftsteuerventile 32 und 33 bleiben geschlossen. Die Einlass- und Auslassventile der deaktivierten Zylinder 21 bleiben für die Dauer jener Zylinderabschaltung vorzugsweise dauerhaft geschlossen. Gegebenenfalls erfolgt unter Einsatz der Druckluftquelle 3 das Zuführen von Luft in den Druckluftspeicher 2 bis darin ein bestimmtes Druckniveau erreicht worden ist.

Ausgehend von der Betriebssituation, dass das Ladeluftsteuerventil 30 geöffnet und das Ladeluftsteuerventil 31 geschlossen ist und folglich nur die linken drei Zylinder aktiv sind, wohingegen die rechten drei Zylinder deaktiviert sind, erfolgt nun ein starker Anstieg der Sollabgabeleistung der Verbrennungskraftmaschine. Sobald der starke Anstieg der Sollabgabeleistung in einer entsprechenden Auswerteeinheit festgestellt wird, erfolgt unter Beibehaltung der Ventilstellung der Ladeluftsteuerventile 30 und 31 eine Öffnung des Druckluftsteuerventils 32 über einen entsprechenden Aktuator und eine Aktivierung der drei verbleibenden Zylinder, d.h. eine Inkraftsetzung der Kraftstoffzuführung und der Ventilbewegungen der Einlass- und Auslassventile. Wie bereits erwähnt, ergibt sich eine Addition der beiden Luftmengen. Der Versorgungspfad der ersten Luftmenge verläuft über den Ladeluftverdichter 22b sich durch den Luftverteiler 24A erstreckend in die darüber erreichbaren Brennräume 21. Über den zweiten Luftpfad, der unter der Prämisse der hier erwähnten Stellung der Ladeluftsteuerventile 30, 31 und der Druckluftsteuerventile 32, 33 völlig getrennt vom ersten Luftpfad ist, gelangt aus dem Druckluftspeicher 2 stammende Luft in die über den Luftverteiler 24B erreichbaren Brennräume 21 der Verbrennungskraftmaschine. Aufgrund der Gestaltung des Ausführungsbeispiels gemäß Figur 4 existiert eine Ventilstellung der Ladeluftsteuerventile 30, 31 und Druckluftsteuerventile 32, 33, durch die alternativ zu der vorherigen eine geänderte Konstellation, bei der die über den Ladeluftverdichter 22b des Abgasturboladers 22 bereitgestellte Ladeluft ausschließlich den über den Luftverteiler 24B verbundenen Brennräumen 21 zuführbar ist und eine ausschließliche Zuströmung der aus dem Druckluftspeicher 2 entnehmbaren Luft in die über den Luftverteiler 24A verbundenen Brennräume 21 möglich ist.

Bezüglich der Grundfunktionalität besteht für einen Einsatz der erfindungsgemäßen Systemlösung keine Notwendigkeit, dass ein kreuzweises tauschen der über den Ladeluftverdichter 22b und der über aus dem Druckluftspeicher 2 versorgten Brennraumgruppen möglich ist. In der Anwendung ist während des Teillastbetriebes, bei dem lediglich ein Teil der Zylinder 21 betrieben wird, ein regelmäßiges Tauschen der Betriebsweise (i) Zylinder bei vorliegender Kraftstoffzuführung und (ii) deaktivierter Kraftstoffzuführung ratsam, da sich andernfalls viele solcher Belastungen, die zu einer Alterung der Motorbauteile führen, weniger verteilen, sondern stärker auf bestimmte Teilbereiche der Verbrennungskraftmaschine fokussieren, was sich gleichermaßen im Bauteilverschleiß wiederspiegelt. Ein weiterer wesentlicher Vorteil jener Betriebsweise ist, dass die Betriebstemperatur der jeweils abgeschalteten Zylinder zumindest annähernd aufrechterhalten bleibt.

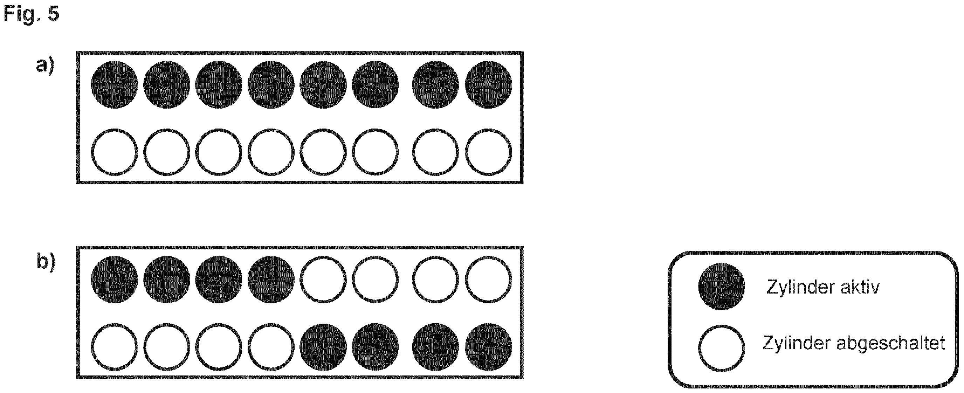

Zur Verdeutlichung der vorgenannten Zylinderabschaltung wird auf die schematische Darstellung der Figur 5 verwiesen. Das Prinzip der Zylinderabschaltung ist hier anhand einer V16 Verbrennungskraftmaschine gezeigt. Sinnvolle Deaktivierungsmuster der Brennräume sind hier unter a) und b) gezeigt. Im ersten Beispiel a) bleiben alle Zylinder einer Reihe aktiv, während die zweite Zylinderreihe vollständig deaktiviert wird. Gemäß dem zweiten Beispiel b) kann es jedoch auch sinnvoll sein, sowohl Zylinder der ersten als auch der zweiten Zylinderreihe zu deaktivieren, wobei hier konkret die ersten vier Zylinder der ersten Reihe aktiv bleiben, während die Zylinder 5 bis 8 abgeschaltet werden. Für die zweite Reihe werden stattdessen die Zylinder 1 bis 4 abgeschaltet, während die Zylinder 5 bis 8 aktiv bleiben. Die vorstehend erläuterten Abschaltungsmuster setzten einen geeigneten Kurbelwellenstern (Kröpfung) im Zusammenhang mit einer geeigneten Zündfolge voraus.

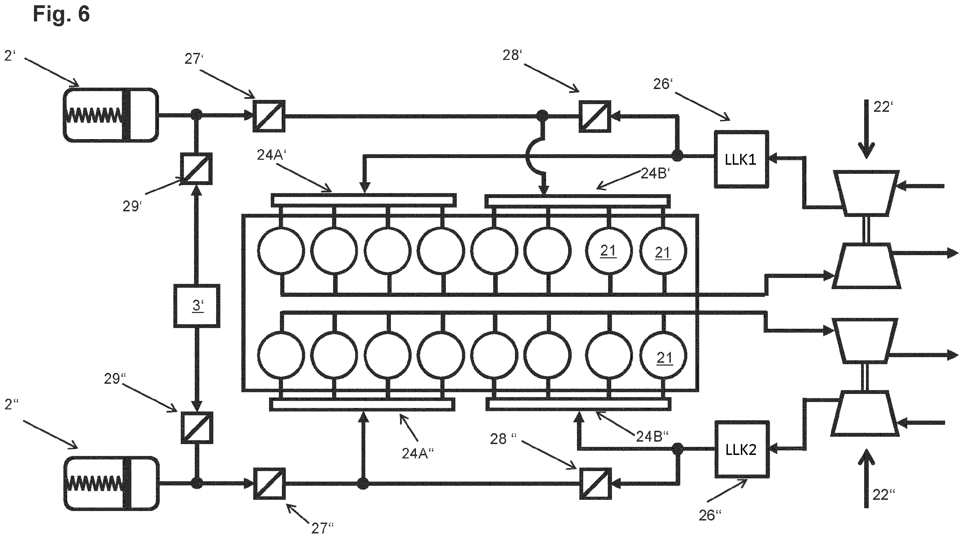

Figur 6 zeigt eine Ausführung der Erfindung für eine V16 Verbrennungskraftmaschine. Die Verbrennungskraftmaschine umfasst n=8 Brennräume 21 pro Zylinderreihe. Das dargestellte erfindungsgemäße System umfasst nun genau eine erfindungsgemäße Vorrichtung pro Zylinderreihe, d.h. pro Zylinderreihe ist ein eigener primärer Ladeluftpfad vorgesehen. Die separaten primären Ladeluftpfade umfassen jeweils einen Abgasturbolader 22', 22" sowie einen Ladeluftkühler 26', 26", um den beiden jeweils zwei Luftverteilern 24A', 24B', 24A", 24B" Ladeluft zuführen zu können. Ebenso ist für jede Zylinderreihe ein eigener Druckluftspeicher 2', 2" vorgesehen. Die beiden erfindungsgemäßen Vorrichtungen sind dabei vom Aufbau und ihrer Funktionsweise entsprechend der Ausführung aus Figur 3 aufgebaut. Eine der strukturell möglichen und gleichzeitig unter einer entsprechenden Auslegung technisch sinnvollen Zylinderabschaltung für die in der Figur 6 abgebildete V16 Verbrennungskraftmaschine zeigt die untere schematische Abbildung der Figur 5 auf. Aus diesen Gründen kann eine tiefergehende Beschreibung an dieser Stelle entfallen. Lediglich der in Figur 3 gezeigte zweite Verdichter 25 ist in Figur 6 nicht gezeigt. Es wäre jedoch möglich, eine zweite Verdichterstufe in jede oder nur eine der gezeigten Vorrichtungen der Figur 6 zu integrieren.

Im Ausführungsbeispiel der Figur 6 können die beiden Druckluftspeicher 2', 2" über denselben Luftpresser 3' nachgeladen werden. Das Vorhandensein zweier separater (unabhängig voneinander betreibbarer) Druckluftspeicher 2', 2" kann bspw. aus Bauraumgründen vorteilhaft sein.

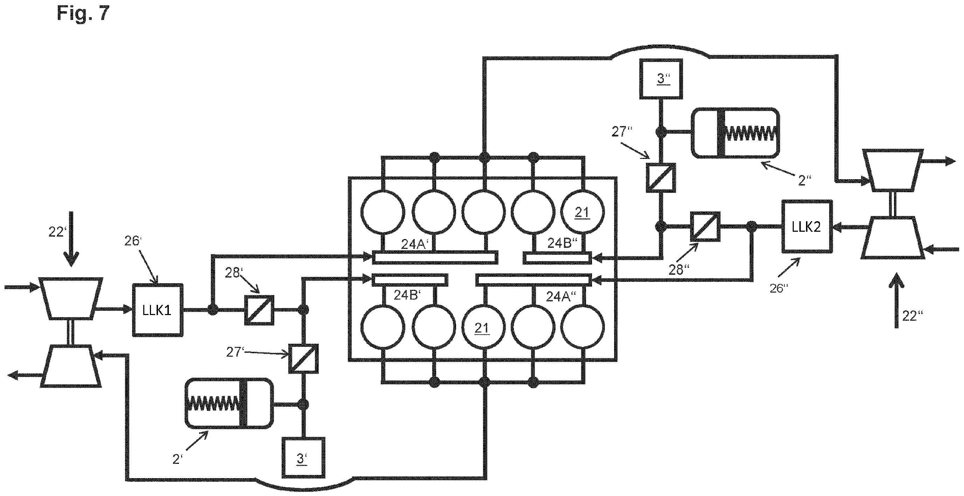

Figur 7 zeigt eine Ausführung der Erfindung für eine V10 Verbrennungskraftmaschine, der fünf Brennräume 21 pro Zylinderreihe und zwei erfindungsgemäße Vorrichtungen aufweist. Allerdings dient in diesem Ausführungsbeispiel eine erfindungsgemäße Vorrichtung nicht zur Luftversorgung solcher Brennräume, die jeweils in ein und derselben Reihe angeordnet sind. Stattdessen enthält eine Brennraumgruppe, deren Luftversorgung über eine gemeinsam genutzte erfindungsgemäße Vorrichtung vorgesehen ist, Brennräume 21, die zwar örtlich benachbart, aber in zwei unterschiedlichen Zylinderreihen angeordnet sind.

Abschließend sollen zwei Randbemerkungen zu den Figuren 6 und 8 nicht unerwähnt bleiben: In einer realen Umsetzung einer erfindungsgemäßen V16 Verbrennungskraftmaschine, die in Anlehnung an die Figur 6 ausgeführt ist, würde man sicherlich die Luftzuführung zu den Brennräumen 21 zwischen den beiden Zylinderreihen platzieren, damit das Abgas aufgrund seiner hohen Temperatur jeweils auf einer möglichst kurzen Laufstrecke vom Zentralbereich der Verbrennungskraftmaschine abgeführt werden kann. Die in der Figur 6 gewählte Darstellung erhöht jedoch die Übersichtlichkeit der schaltungstechnisch dargestellten Luftpfade. Diesbezüglich orientiert sich das in der Figur 7 gezeigte Schaltbild der V10 Verbrennungskraftmaschine eher an einer realen Umsetzung. In jenem Schaltbild erfolgt die Luftverteilung an die jeweiligen Brennräume 21 ausgehend vom mittleren Bereich, derweil das Abgas an die jeweilige Außenseite der Verbrennungskraftmaschine abgeleitet wird. Zwecks besserer Übersichtlichkeit sind jedoch in jener Abbildung die beiden Luftstrecken, die jeweils mit einer erfindungsgemäßen Vorrichtung ausgestattet sind, an zwei diametralen Seiten der Verbrennungskraftmaschine eingezeichnet, was klarerweise an einem realen Aufbau sicherlich weniger praktikabel wäre.

Die Vorteile der Erfindung lassen sich nachfolgend nochmals kompakt zusammenfassen:
Bei einer Betätigung des erfindungsgemäßen Boost-Systems der Figur 3 erfolgt eine gleichzeitig additiv wirkende Luftzuführung in die Brennräume 21 und zwar mittels des primären Luftpfades über den Ladeluftverdichter 22b des Abgasturboladers 22 sowie aus dem Druckluftspeicher 2. Hingegen wirkt das dem Stand der Technik entsprechende Boost-System gemäß der Figur 1 substituierend, weil während eines Boost-Betriebs die Luftzufuhr über den regulären Luftpfad außer Kraft gesetzt wird.

Klarerweise erfolgt - wie bereits erwähnt - die erhöhte Luftversorgung der Brennräume während eines Boost-Betriebes unter einer darauf abgestimmten Erhöhung der Kraftstoffzuführungsmenge. Im erfindungsgemäßen Boostsystem wird die durch eine Aktivierung der Boost-Funktion erhöhte Luftfördermenge unmittelbar den Brennräumen 21 zugeführt. Demzufolge führt ein Boost-Betrieb einer erfindungsgemäßen Verbrennungskraftmaschine zu einer erhöhten Freisetzung von Wärmeenergie innerhalb der Brennräume 21, die dem Abgasnachbehandlungssystem zur Verfügung steht. Hingegen führt ein dem Stand der Technik entsprechendes System gemäß der Figur 2, bei der die aus dem Druckluftspeicher 2 entnehmbare Druckluft unmittelbar in den Abgaspfad der Verbrennungskraftmaschine eingespeist wird, zu einer sehr deutlichen Absenkung der Abgastemperatur.

Aus der Perspektive der Brennräume bedeutet ein Boost-Betrieb eine besonders schnelle Mengenerhöhung des zugeführten Kraftstoff-Luftgemisches, was eine Erhöhung der Stickoxid-Bildung zur Folge hat. Demzufolge muss bzw. müsste die Zuführungsrate des Reduktionsmittels deutlich erhöht werden, damit ein (nahezu) vollständiger Abbau der Stickoxide erfolgen kann, was zur Einhaltung der verbindlichen Abgasemissions-Vorschriften zwingend ist. Bei einer ausreichend hohen Abgastemperatur stellt dies kein Problem dar, wohingegen eine zu geringe Abgastemperatur zwingend vermieden werden muss.

Sofern aber die Abgastemperatur respektive die Temperatur im Abgasnachbehandlungssystem für das Quantum der im Abgas enthaltenen Stickoxide zu niedrig ist, würde - ohne Berücksichtigung der thermischen Verhältnisse - eine rein mengenmäßig ausreichend hohe Reduktionsmittel-Zuführungsrate keineswegs eine ausreichend hohe Konversionsrate der Stickoxide bewirken. Eine derartige Betriebsweise wäre sogar mehrfach kontraproduktiv. Die Menge an zugeführtem Reduktionsmittel, die ohnehin keinen Beitrag für den Abbau der Stickoxide leisten kann, würde eine Absenkung der bereits ohnehin zu niedrigen Temperatur im Abgasnachbehandlungssystem bewirken und damit eine weitere Abschwächung der Konversionsrate auslösen. Ferner haftet sich ein Teil des zugeführten Reduktionsmittels, welches sich nicht an der chemischen Reduktion zum Abbau von Stickoxiden beteiligt, an der Katalysatoroberfläche an, was kumulierend zur Unwirksamkeit des Katalysators führt. Demzufolge muss ein Reduktionsmittelüberschuss weitest möglich vermieden werden, wobei hierbei die rein quantitative Betrachtung mit einer Berücksichtigung des Temperatureinflusses ergänzt werden muss.

Bei Vorliegen einer zu geringen Temperatur innerhalb des Abgasnachbehandlungssystems, um eine (nahezu) vollständige Reduktion der Stickoxide erzielen zu können, stellt eine entsprechende Verkleinerung der Reduktionsmittel-Zuführungsrate die weniger schlechte Option dar. Dennoch können verbindlich geltende Emissionsvorschriften nicht eingehalten werden, was einen Betrieb einer solchen Verbrennungskraftmaschine verbietet.

Demzufolge weist das erfindungsgemäße System die Vorteile und Folgevorteile der beiden vorbekannten Systeme auf. Ferner sind beim erfindungsgemäßen System die Nachteile und Folgenachteile der beiden vorbekannten Systeme nicht existent. Festzuhalten gilt, dass im Hinblick auf die Systemlösung gemäß der Figur 1 ein hierfür verwendeter Druckluftspeicher 2 eine wesentlich höhere Speicherkapazität (bspw. unter Verwendung eines vergrößerten Speichervolumens und/oder eines erhöhten Druckniveaus) aufweisen muss, damit mit diesem vorbekannten System eine mit dem erfindungsgemäßen System vergleichbare Dynamikerhöhung erzielbar ist. Demzufolge muss bei der Ausführung gemäß Figur 1 auch ein längerer Zeitraum akzeptiert werden, bis die Boost-Funktion erneut verfügbar ist oder eine entsprechend aufwendigere On-board Vorrichtung, z.B. ein Luftpresser verwendet werden, mit der eine höhere Luftzuführungsrate in den Druckspeicher 2 möglich ist und ggf. ein höheres Druckniveau erzeugt werden kann.

Festzuhalten gilt ebenso, dass im Hinblick auf die Systemlösung gemäß der Figur 2 ein Abgasturbolader 1 verwendet werden muss, der mit zwei Turbinenrädern ausgestattet sein muss, um eine weitestgehend additive Nutzung des Boost-Systems zu ermöglichen. Damit unter dem Aspekt der zwingenden Einhaltung der Abgasgrenzwerte eine hohe Verfügbarkeit der Boost-Funktion gegeben ist, müssen der Abgaspfad und der Druckluftpfad hermetisch voneinander getrennt sein. Dies erfordert eine Anpassung des Abgasturboladers 1, deren Aufwand sehr hoch ist.

**Bezugszeichenliste**

| | |
|---|---|
| Abgasturbolader | 1 |
| Druckluftspeicher | 2, 2', 2" |
| Druckluftquelle | 3, 3', 3" |
| Schaltelemente | 4, 5, 6 |
| Luftverteiler | 7 |
| Brennraum | 8 |
| Abgassammler | 10 |
| Brennraum | 21 |
| Abgasturbolader | 22, 22', 22" |
| Turbine | 22a |
| Ladeluftverdichter | 22b |
| Aufspaltung | 23 |
| Luftverteiler | 24A, 24B, 24A', 24B', 24A", 24B" |
| Ladeluftverdichter | 25 |
| Elektromotor | 25a |
| Ladeluftkühler | 26, 26', 26" |
| Druckluftsteuerventil | 27, 27', 27", 32, 33 |
| Steuerschnittstelle | 27a |
| Ladeluftsteuerventil | 28, 28', 28", 30, 31 |
| Steuerschnittstelle | 28a |
| Rückschlagventil | 29, 29', 29" |
| Abgassammler | 35 |

## Patentansprüche

1. Verfahren zum Betrieb einer aufgeladenen Verbrennungskraftmaschine mit wenigstens einer Zylindergruppe mit einer Anzahl von n Brennräumen (21), wobei während eines ersten Betriebszustandes alle n Brennräume (21) mit Verbrennungsluft über einen primären Ladeluftpfad versorgt werden und während eines zweiten Betriebszustandes nur ein Teil der n Brennräume (21) aus dem primären Ladeluftpfad und ein anderer Teil der n Brennräume (21) aus einem gesonderten Druckluftspeicher (2, 2', 2") mit Verbrennungsluft versorgt werden.

2. Verfahren nach Anspruch 1, **dadurch gekennzeichnet, dass** die n Brennräume (21) Bestandteil einer Zylinderreihe der Verbrennungskraftmaschine sind, wobei die n Brennräume (21) alle in einer Reihe angeordneten Brennräume (21) der Zylinderreihe umfassen oder nur einen Teil der in einer Reihe angeordneten Brennräume (21) der Zylinderreihe, oder die n Brennräume in jeweils gegenüberliegenden Positionen mehrerer Reihen angeordnet sind.

3. Verfahren nach einem der vorstehenden Ansprüche, **dadurch gekennzeichnet, dass** die Anzahl n eine gerade oder ungerade Zahl ist, wobei in einem zweiten Betriebszustand eine symmetrische oder unsymmetrische Aufteilung der Luftversorgung der n Brennräume (21) aus dem primären Ladeluftpfad und dem Druckluftspeicher (2, 2', 2") erfolgt.

4. Verfahren nach einem der vorstehenden Ansprüche, **dadurch gekennzeichnet, dass** im zweiten Betriebszustand die Luftversorgung eines jeweiligen Brennraums (21) unabhängig bzw. weitestgehend unabhängig davon ist, ob dieser Brennraum (21) über den primären Ladeluftpfad oder aus dem Druckluftspeicher (2, 2', 2") versorgt wird.

5. Verfahren nach einem der vorstehenden Ansprüche, **dadurch gekennzeichnet, dass** ein Übergang vom ersten in den zweiten Betriebszustand aufgrund einer kurzfristig eintretenden deutlichen Steigerung der Soll-Abgabeleistung der Verbrennungskraftmaschine ausgelöst wird, insbesondere wenn der Zeitgradient der Soll-Abgabeleistung und/oder der Anstiegswert, insbesondere der Absolutwert des Anstiegswertes, über einem definierbaren Schwellwert liegt.

6. Verfahren nach einem der vorstehenden Ansprüche, **dadurch gekennzeichnet, dass** die n Brennräume (21) durch zwei oder mehr separate Luftverteiler (24A, 24B, 24A', 24B', 24A", 24B") versorgt werden, wobei der primäre Ladeluftpfad im ersten Betriebszustand auf zwei oder mehr separate Pfade zur parallelen Versorgung der zwei oder mehreren Luftverteiler (24A, 24B, 24A', 24B', 24A", 24B") aufgespalten wird und im zweiten Betriebszustand der primäre Ladeluftpfad nur einen oder zumindest nur einen Teil der im ersten Betriebszustand mit Ladeluft versorgten Luftverteiler (24A, 24B, 24A', 24B', 24A", 24B") mit Ladeluft versorgt, während der andere Teil der Luftverteiler (24A, 24B, 24A', 24B', 24A", 24B") aus dem Druckluftspeicher (2, 2', 2") versorgt wird.

7. Verfahren nach einem der vorstehenden Ansprüche, **dadurch gekennzeichnet, dass** in einem Niedriglastbetrieb eine Zylinderabschaltung erfolgt, wobei vorzugsweise die aktive Zylindergruppe betriebszustandsabhängig entweder nur über den primären Ladeluftpfad versorgt wird oder alternativ über den primären Ladeluftpfad und zugleich aus dem Druckluftspeicher (2, 2', 2") mit Verbrennungsluft versorgt werden kann.

8. Verfahren nach einem der vorstehenden Ansprüche, **dadurch gekennzeichnet, dass** der Druckluftspeicher (2, 2', 2") durch eine gesonderte Druckluftquelle (3, 3') mit Umgebungsluft und/oder durch den primären Ladeluftpfad aufgeladen werden kann, wobei eine Aufladung ausgeführt wird, wenn das Druckniveau innerhalb des Druckluftspeichers (2, 2', 2") unterhalb eines Mindestschwellwertes liegt, wobei eine Aufladung des Druckluftspeichers (2, 2', 2") über den primären Ladeluftpfad nur in einem unteren Druckbereich vorgesehen ist, wohingegen eine Aufladung des Druckluftspeichers (2, 2', 2") über die gesonderte Druckluftquelle (3, 3') vorzugsweise solange erfolgt, bis das Druckniveau einen Zielschwellwert erreicht bzw. bereits überschritten hat.

9. Verfahren nach einem der vorstehenden Ansprüche, **dadurch gekennzeichnet, dass** in Abhängigkeit der aus dem Druckluftspeicher (2, 2', 2") jeweils momentan bereitgestellten Luftmenge zeitlich parallel eine Ansteuerung eines zweiten im primären Ladeluftpfad einwirkenden Ladeluftverdichters (25) ausgeführt wird, vorzugsweise um die im primären Ladeluftpfad bereitgestellte Luftmenge an die aus dem Druckluftspeicher (2, 2', 2") abgegebene Luftmenge anzupassen und/oder dass in Abhängigkeit der jeweils momentan aus dem primären Ladeluftpfad bereitgestellten Luftmenge zeitlich parallel eine Ansteuerung eines Ventils (27, 27', 27") bzw. eine Ansteuerung einer Ventilanordnung (32, 33) ausgeführt wird, um die mit der vorzugsweise aus dem Druckluftspeicher (2, 2', 2") abgegebenen Luftmenge an die über den primären Ladeluftpfad bereitgestellte Luftmenge anzupassen.

10. Verfahren nach einem der vorstehenden Ansprüche, **dadurch gekennzeichnet, dass** die im Druckluftspeicher (2, 2', 2") gespeicherte Luft erwärmt wird.

11. Verfahren nach einem der vorstehenden Ansprüche, **dadurch gekennzeichnet, dass** während eines dritten Betriebszustandes, insbesondere während eines Kaltstarts, nur denjenigen Brennräumen (21) der n Brennräume (21) Kraftstoff zugeführt wird, die ihre Verbrennungsluft aus dem Druckluftspeicher (2, 2', 2") erhalten.

12. Vorrichtung zur Bereitstellung von Verbrennungsluft in einer aufgeladenen Verbrennungskraftmaschine mit wenigstens einer Zylindergruppe umfassend eine Anzahl n von Brennräumen (21), wobei die Vorrichtung zwei oder mehr separate Luftverteiler (24A, 24B, 24A', 24B', 24A", 24B"), einen primären Ladeluftpfad, der mindestens eine Einrichtung zur Verdichtung der Ladeluft enthält, und wenigstens einen Druckluftspeicher (2, 2', 2") aufweist, wobei eine Ventilanordnung (27, 27', 27", 28, 28', 28", 30, 31, 32, 33) vorgesehen ist, um die zwei oder mehreren Luftverteiler (24A, 24B, 24A', 24B', 24A", 24B") wahlweise durch den primären Ladeluftpfad mit Verbrennungsluft zu versorgen oder alternativ nur einen Teil der Luftverteiler (24A, 24B, 24A', 24B', 24A", 24B") aus dem primären Ladeluftpfad mit Verbrennungsluft zu versorgen, während (i) der gesamte verbleibende Teil der Luftverteiler (24A, 24B, 24A', 24B', 24A", 24B") oder (ii) nur eine Untergruppe des verbleibenden Teils der Luftverteiler (24A, 24B, 24A', 24B', 24A", 24B") aus dem Druckluftspeicher (2, 2', 2") mit Verbrennungsluft versorgt werden kann.

13. Vorrichtung nach Anspruch 12, **dadurch gekennzeichnet, dass** die n Brennräume (21) Bestandteil einer Zylinderreihe der Verbrennungskraftmaschine sind, wobei die n Brennräume (21) alle in einer Reihe angeordneten Brennräume (21) der Zylinderreihe umfassen oder nur einen Teil der in einer Reihe angeordneten Brennräume (21) der Zylinderreihe, oder die n Brennräume in jeweils gegenüberliegenden Positionen mehrerer Zylinderreihen angeordnet sind.

14. Vorrichtung nach Anspruch 12 oder 13, **dadurch gekennzeichnet, dass** die Vorrichtung eine Steuerung aufweist, die konfiguriert ist, das Verfahren nach einem der Ansprüche 1 bis 11 auszuführen.

15. Vorrichtung nach einem der Ansprüche 13 oder 14, **dadurch gekennzeichnet, dass** der Druckluftspeicher (2, 2', 2") über wenigstens ein Druckluftsteuerventil (27, 27', 27", 32, 33) mit wenigstens einem der Luftverteiler (24A, 24B, 24A', 24B', 24A", 24B") in Verbindung steht, wobei das Druckluftsteuerventil (27, 27', 27" 32, 33) insbesondere extern über eine Schnittstelle (27a) durch die Steuerung ansteuerbar ist.

16. Vorrichtung nach einem der Ansprüche 12 bis 15, **dadurch gekennzeichnet, dass** der primäre Ladeluftpfad einer Brennraumgruppe, insbesondere stromabwärts eines Ladeluftkühlers (26, 26', 26"), dauerhaft in Fluidverbindung mit wenigstens einem bzw. einem Teil der Luftverteiler (24A, 24B, 24A', 24B', 24A", 24B") verbunden ist und in der Fluidverbindung zu wenigstens einem anderen Luftverteiler (24B, 24A', 24B', 24A", 24B") wenigstens ein Ladeluftsteuerventil (28, 28', 28", 30, 31) vorgesehen ist.

17. Vorrichtung nach Anspruch 16, **dadurch gekennzeichnet, dass** das Ladeluftsteuerventil (28, 28', 28", 30, 31) direkt mit dem Druckluftsteuerventil (27, 27', 27" 32, 33) verbunden ist.

18. Vorrichtung nach einem der Ansprüche 16 oder 17, **dadurch gekennzeichnet, dass** das Ladeluftsteuerventil (28, 28', 28", 30, 31) extern ansteuerbar ist oder als Rückschlagventil, insbesondere passives Rückschlagventil ausgeführt ist.

19. Vorrichtung nach einem der vorstehenden Ansprüche 12 bis 18, **dadurch gekennzeichnet, dass** der Druckluftspeicher (2, 2', 2") mit einer gesonderten oder bereits anderweitig vorhandenen Druckluftquelle (3, 3') vorzugsweise über ein vorzugsweise als Rückschlagventil (29, 29', 29") ausgeführtem Ventil in Verbindung steht und/oder mit dem primären Ladeluftpfad zum Aufladen des Druckluftspeichers (2, 2', 2") verbindbar ist, wobei die Druckluftquelle (3, 3') über einen Nebenabtrieb der Verbrennungskraftmaschine angetrieben werden kann und vorzugsweise bedarfsgerecht betrieben werden kann.

20. Vorrichtung nach einem der vorstehenden Ansprüche 12 bis 19, **dadurch gekennzeichnet, dass** im primären Ladeluftpfad zwei oder mehr in Reihe geschaltete Ladeluftverdichter (22b, 25) vorgesehen sind, wobei zumindest einer der Ladeluftverdichter (25) bedarfsabhängig betrieben werden kann, insbesondere ein elektrisch angetriebener zweiter Ladeluftverdichter (25) ist, und/oder wenigstens ein anderer erster Ladeluftverdichter (22b) Bestandteil eines Abgasturboladers (22) ist.

21. Verbrennungskraftmaschine mit mindestens einer Vorrichtung gemäß einem der vorstehenden Ansprüche 12 bis 20.

22. Verbrennungskraftmaschine nach Anspruch 21, **dadurch gekennzeichnet, dass** die Verbrennungskraftmaschine mehrere Brennraumgruppen mit jeweils mindestens einer Anzahl n von Brennräumen (21) umfasst, wobei jede Brennraumgruppe eine Vorrichtung gemäß einem der Ansprüche 12 bis 20 umfasst.

23. Verbrennungskraftmaschine nach Anspruch 22, **dadurch gekennzeichnet, dass** die Druckluftspeicher (2', 2") der wenigstens zwei Vorrichtungen durch eine gemeinsame externe Druckquelle (3'), insbesondere einen gemeinsamen Luftpresser aufladbar sind.

24. System, welches durch eine dynamisch betriebene Verbrennungskraftmaschine betrieben wird, insbesondere in einer On-road, Off-road oder einer Off-highway mit einer Vorrichtung nach einem der Ansprüche 12 bis 20.
